# EUROPEAN PATENT SPECIFICATION

(11) **EP 1 931 103 B1**
(45) Date of publication and mention of the grant of the patent: **10.10.2012**
(21) Application number: 07121866.3
(22) Date of filing: 13.10.2000
(51) Int. Cl.: H04L 29/06, H04L 29/14

(54) **Method and system for compressing and decompressing packet headers**
System und Verfahren zum Senden und Empfangen von Paketen
Système et procédé pour la transmission et la réception de paquets

(30) Priority: 14.10.1999 US 159360 P; 28.03.2000 US 536639
(43) Date of publication of application: 11.06.2008
(62) Divisional of application: 00970868.6
(73) Proprietor: Nokia Corporation, 02150 Espoo (FI)
(72) Inventor: Le, Khiem, Coppell, TX 75019 (US); Clanton, Christopher, Richardson, TX 75082 (US); Zheng, Haihong, Coppel, TX 75019 (US); Liu, Zhigang, Irving, TX 75063 (US)
(74) Representative: Derry, Paul Stefan

(56) References cited:
- WO-A-00/79764
- CASNER CISCO SYSTEMS V JACOBSON CISCO SYSTEMS S: "Compressing IP/UDP/RTP Headers for Low-Speed Serial Links; rfc2508.txt" IETF STANDARD, INTERNET ENGINEERING TASK FORCE, IETF, CH, 1 February 1999 (1999-02-01), XP015008291 ISSN: 0000-0003
- DEGERMARK M ET AL: "LOW-LOSS TCP/IP HEADER COMPRESSION FOR WIRELESS NETWORKS" WIRELESS NETWORKS, ACM, US, vol. 3, no. 5, 1 October 1997 (1997-10-01), pages 375-387, XP000728935 ISSN: 1022-0038

## Description

The present invention relates to compression and decompression of headers in data packet transmissions.

For Internet Protocol (IP) based real-time multimedia, the Real-Time Transfer Protocol (RTP) is predominantly used on top of the User Datagram Protocol (UDP/ IP). RTP is described in detail in RFC 1889.The size of the combined IP/UDP/RTP headers is at least 40 bytes for IPv4 and at least 60 bytes for IPv6. A total of 40-60 bytes overhead per packet may be considered heavy in systems (e.g., such as cellular networks) where spectral efficiency is a primary concern. Consequently, a need exists for suitable IP/UDP/RTP header compression mechanisms. A current header compression scheme is described in RFC 2508, by S. Casner, V. Jacobson, "Compressing IP/UDP/RTP Headers for Low Speed Serial Links", Internet Engineering Task Force (IETP), February 1999, and which is able to compress the 40/60 byte IP/UDP/RTP header down to 2 or 4 bytes over point-to-point links. The existing header compression algorithms are based on the observation that most fields of the IP packet headers remain constant in a packet stream during the length of a session. Thus, it is possible to compress the header information by establishing a compression state (the full header information) at the de-compressor and by simply carrying minimal amount of header information from the compressor to the de-compressor.
IP/UDP/RTP header compression schemes, as described for example in RFC 2508, take advantage of the fact that certain information fields carried in the headers either 1.) do not change ('Type 1' header fields) or 2.) change in a fairly predictable way ('Type 2' header fields). Other fields, referred to as 'Type 3' header fields, vary in such a way that they must be transmitted in some form in every packet (i.e. they are not compressible).

Examples of Type 1 header fields are the IP address, UDP port number, RTP SSRC (synchronization source), etc. These fields need only be transmitted to the receiver/decompressor once during the course of a session (as part of the packet(s) transferred at session establishment, for example). Type 1 fields are also called 'unchanging' fields.

Examples of Type 2 header fields are the RTP time stamp, RTP sequence number, and IP ID fields. All have a tendency to increment by some constant amount from packet(n) to packet (n+1). Thus, there is no need for these values to be transmitted within every header. It is only required that the receiver/decompressor be made aware of the constant increment value, hereafter referred to as the first order difference (FOD), associated with each field that exhibits this behavior. Receiver/decompressor utilizes these FODs to regenerate up-to-date Type 2 field values when reconstructing the original header. Type 2 fields are part of 'changing' fields.

It should be emphasized that, on occasion, Type 2 fields will change in some irregular way. Frequency of such events depends on several factors, including the type of media being transmitted (e.g., voice or video), the actual media source (e.g., for voice, behavior may vary from one speaker to another), and the number sessions simultaneously sharing the same IP-address.

An Example of a Type 3 header field is the RTP M-bit (Marker), which indicates the occurrence of some boundary in the media (e.g., end of a video frame). Because the media normally varies in unpredictable ways, this information cannot be truly predicted. Type 3 fields are part of 'changing' fields.

The decompressor maintains decompression context information that contains all the pertinent information related to rebuilding the header. This information is mainly type 1 fields, FOD values, and other information. When packets are lost or corrupted, the decompressor can lose synchronization with the compressor such that it can no longer correctly rebuild packets. Loss of synchronization can occur when packets are dropped or corrupted during transmission between compressor and decompressor.

Given the above, the compressor needs to transmit three different types of headers during the course of a session:
- Full Header (FH): Contains the complete set of all header fields (Types 1 , 2, and 3). This type of header is the least optimal to send due to its large size (e.g., 40 bytes for IPv4). In general, it is desirable to send an FH packet only at the beginning of the session (to establish Type 1 data at the receiver). Transmission of additional FH packets has adverse effects on the efficiency of the compression algorithm. When the compressor transmits FH packets, it is said to be in the 'FH state'.
- First Order (FO): Contains minimal header information (e.g. Type 3 fields), compressor/decompressor specific control fields (specific to the compression algorithm in use), and information describing changes in current FOD fields. An FO packet is basically an SO packet (described below), with additional information that establishes new FOD information for one or more Type 2 fields at the decompressor. If the header compression is being applied to a VoIP (voice over internet protocol) stream, transmission of an FO packet might be triggered by the occurrence of a talk spurt after a silence interval in the voice. Such an event results in some unexpected change in the RTF time stamp value, and a need to update the RTP time stamp at the receiver by a value other than the current FOD. The size of FO packets depends on the number of Type 2 fields whose first order difference changed (and the amount of the absolute value of each change). When the compressor transmits FO packets, it is said to be in the 'FO state'.
- Second Order (SO): A SO packet contains minimal header information (e.g. Type 3 fields), and compressor and decompressor specific control fields. The preferred mode of operation for the compressor and decompressor is transmission and reception of SO packets, due to their minimal size (on the order of just 2 bytes or even less). When the compressor transmits SO packets, it is said to be in the 'SO state'. SO packets are transmitted only if the current header fits the pattern of an FOD.

RFC 2508 is based on the concept that most of the time, the RTP fields that change from one packet to the next, such as the RTP time stamp, can be predicted by linear extrapolation of transmitted SO packets. Essentially the only information that has to be sent is a sequence number, used for error and packet loss detection (as well as a context information ID). When the transmitter determines that linear extrapolation cannot be applied to the current packet with respect to the immediately preceding packet, a FO packet is transmitted. To initiate the session, a FH packet is transmitted. In addition, when the receiver determines that there is packet loss (as detected by a sequence number incrementing by more than 1) the receiver will explicitly request the transmitter to transmit the full header in order to allow a resynchronization.

However, the header compression defined in RFC 2508 is not well suited for certain environments (such as cellular or wireless environments), where bandwidth is at a premium and errors are common. In the RFC 2508 header compression scheme, the RTP time stamp is assumed to have most of the time a linearly increasing pattern. When the header conforms to the pattern, essentially only a short sequence number sent as SO is needed in the compressed header. When the header does not conform to the pattern, the difference between the RTP time stamps of the current header and of the previous one is sent in the FO compressed header.

The additional bandwidth requirement can manifest itself in various ways, depending on the operating environment. For example, in cellular systems it is in general very desirable to limit bandwidth usage as much as possible, as it is a scarce resource.

RFC 2508 suffers from lack of robustness to withstand header errors or losses, because the decompression of the current header can only be done if the immediately preceding header was also received without error and decompressed. The header compression defined in RFC 2508 is not well suited for cellular environments, where bandwidth is at a premium and long error bursts are not uncommon. In RFC 2508, when a packet loss is detected, subsequent packets with compressed headers are invalidated, with a further requirement that it is necessary to send a large size header to recover from the error. Large size headers consume bandwidth and create peaks in the bandwidth demand which are more difficult to manage.

Just using a short sequence number (one with a limited number of bits) to detect packet loss is not robust to an error-prone network, such as in a wireless network where long loss may happen at any time. In this case, long loss is defined as loss of sequence cycle or packets in a row. Under the situation of a long loss, a series of packets within the number of packets of the sequence cycle having a packet identification defined by a limited number of bits may get lost and, as a result, the sequence number in the packet received by the decompressor (receiving device in uplink or downlink) of the receiver wraps around (repeats). For example, assuming the sequence number consists of k bits, the sequence cycle equals to 2^{k}.

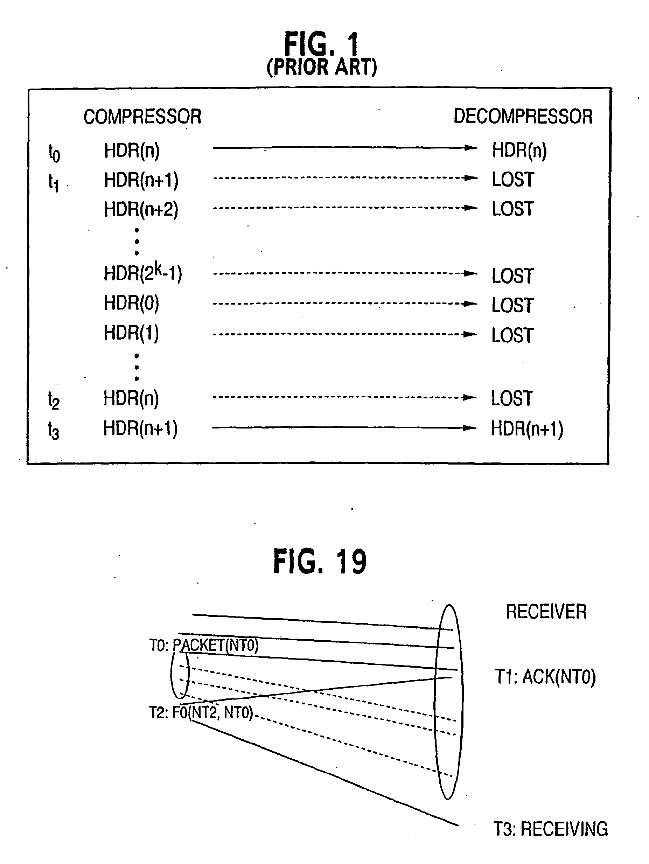

As shown in Fig. 1, the compressor (transmitting device in uplink or downlink) sent packet with seq=n at time tₒ, and the following 2^{k} packets, beginning from packet with seq=n+1 at time t1 and ending at packet with seq=n at time t₂. At time t₃, the compressor sends a packet with sequence number equal to n+1 again. Assume a packet with a sequence number equal to n+1 sent at time t₁ until the packet with the sequence number equal to n is sent at time t₂, which are all lost due to long loss, then the decompressor only receives the packet with the sequence number equal to n sent at time to and the packet with the sequence number equal to n+1 sent at time t₃. Based on the current packet loss detection scheme defined in RFC 2508, the decompressor concludes that there is no packet loss and decompresses the packet in a wrong way. This not only affects the correctness of decompression of packet with a sequence number equal to n+1, but the subsequent packets as well.

The present invention can provide improved transmission and reception of packets in environments, such as wireless communications, which are prone to periodic interruption of packet reception such as that caused by fading, etc. The invention can provide improved performance of packet transmission and reception in comparison to RFC 2508 including elimination of the wrap around problem of the prior art discussed above in Fig. 1. Proper decoding of a compressed header in a current packet in accordance with the invention is not dependent on correct decompression of an immediately preceding packet as with RFC 2508.

This invention provides a mechanism which detects long loss at the header compression level, as well as a corresponding recovery scheme after detection of long loss. The invention is generally applicable to communication protocols where sequence synchronization must be maintained between the transmitter and the receiver, in the presence of long error bursts.

Adaptive header compression is a general framework for robust header compression, that can be parameterized to account for the existence/non-existence and performance characteristics of a reverse channel. The framework includes three basic modes of operation:
- Bidirectional Deterministic Mode: This mode is used in the case where there is a 'well-defined' reverse channel, which can be used to carry various types of feedback information from the decompressor to the compressor. One example of such feedback from the decompressor is an acknowledgment, used, e.g., to advance from a lower compression state to a higher compressor state.
- Bidirectional Opportunistic Mode: This mode of operation is used in the case where a reverse channel exists, but is 'loosely' defined, i.e., the channel may not always be available, or may be slow/unreliable.
- Unidirectional Mode (Pessimistic or Optimistic): This mode of operation is used when there is no reverse channel of any kind.

The invention is defined by the claims.
Fig. 1 illustrates the deficiency of packet loss WITH RFC 2508.
Fig. 2 illustrates an example of a system architecture which may be used to practice the present invention.
Fig. 3 conceptually illustrates compression context information.
Fig. 4 conceptually illustrates decompression context information.
Fig. 6 illustrates the transition of a compressor from transmitting headers having a higher number of bits to headers having a lower number of bits using acknowledgments
Fig. 7 illustrates the transition of a compressor from transmitting headers with a first order of compression to headers with a second order of compression
Fig. 9 illustrates the operation of a compressor and decompressor using acknowledgments to control the transition between sequence numbers having k bits and extended bits and back to k bits
Fig. 10 illustrates bandwidth reduction achieved by transmitting a sequence of FH and FO packets before an acknowledgment is generated by the decompressor signifying reception of a FH packet.
Fig. 11 illustrates extrapolation of packets received by the decompressor to recover headers of lost packets in accordance with the present invention.
Figs. 14A-F illustrate formats of packets which are transmitted by the present invention.
Fig. 15 illustrates the switching of a state of compression of a compressor to a higher state of compression only after an acknowledgment is received from a decompressor
Fig. 16 illustrates the switching of a state of compression of a compressor to a higher state of compression before a present number of packets arrives at a decompression when an acknowledgment is received.
Fig. 17 illustrates the switching of a state of compression of a compressor to a higher state of compression after a preset number of packets arrives at a decompressor before an acknowledgment arrives.
Fig. 18 illustrates the switching of a state of compression of a compressor to a higher state of compression only after a present number of packets arrives at a decompression.
Fig. 19 graphically illustrates a comparison of the invention with RFC 2508.
Fig. 20 illustrates a graphical analysis of the performance of the present invention.

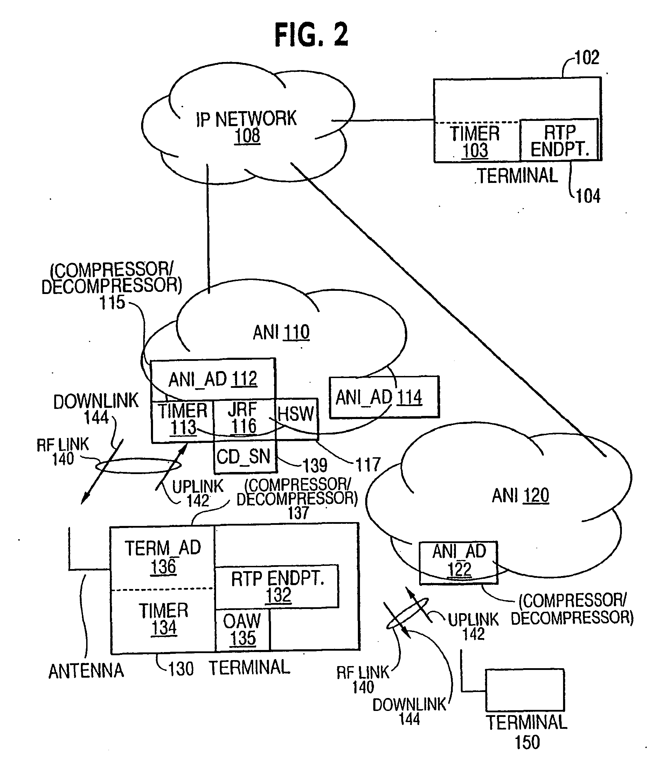

Fig. 2 illustrates an exemplary system in which the the present invention may be practiced. However, it should be understood that the present invention is not limited thereto with other system architectures being equally applicable to the practice of the invention. A terminal 102 is connected to a IP network 108. Terminal 102 may be, without limitation, a personal computer or the like running RTP/UDP/IP, and providing packetized voice samples in RTP packets for transmission over IP network 108. Terminal 102 includes a RTP endpoint 104 which identifies this terminal (e.g., including IP address, port number, etc.) as either a source and/or destination for RTP packets. While IP network 108 is provided as an example of a packet network, however, other types of packet switched networks or the like can be used in place thereof. Terminal 102 also includes a local timer 103 for generating a time stamp.

Access network infrastructures (ANI) 110 and 120, which may be resident in a base station subsystem (BSS), are connected to IP network 108. The ANI's are network entities and network nodes. A plurality of wireless mobile terminals which are network entities and network nodes and function as mobile compressors and mobile decompressors (two wireless terminals 130 and 150 are illustrated) are coupled via radio frequency (RF) links 140 to ANIs 110 and 120. When one of the mobile terminals 130 and/or 150 move, it is necessary for the terminal(s) from time to time, as a consequence of movement beyond radio connection with one ANI, to be handed off to another ANI. This process also requires, when header compression and decompression is used and located in the ANI, the transfer of compression and decompression context information from one ANI (old) to another ANI (new) to achieve seamlessness, e.g. if mobile terminals 130 and/or 150 move and are handed off from ANI 110 to ANI 120. The transfer, as discussed below, can happen at various times but to minimize disruption, it should be completed by the time the new ANI takes over the header compression/decompression role from the old ANI. The relocation of compression/decompression functions occur when the new network entity takes over at a point in time. On the other hand, the transfer of context information may be spread over a time material and precedes relocation. RF link 140 includes, as illustrated, an uplink traffic 142 (from mobile terminals 130 and 150 to ANI 110) and downlink traffic 144 (from ANI 110 to mobile terminals 130 and 150). The mobile terminals 130 and/or 150 are handed off from one ANI, such as ANI 110 when one or more of the mobile terminals move to another ANI, e.g. ANI 120. Each ANTI interfaces with one or more of the wireless (or radio frequency) terminals (including terminal 130) in a region to IP network 108, including converting between wireline signals (provided from IP network 108) and wireless or RF signals (provided to or from terminals 130 and 150). Thus, each ANI allows packets, such as, but not limited to, RTP packets transmitted and received from IP network 108 to be sent over RF link 140 to at least one of wireless terminals 130 and 150, and allows transmission of packets, such as RTP packets but not limited to RTP packets, to be transmitted from terminals 130 and 150 to be transmitted by IP network 108 to another terminal, such as terminal 102.

Each ANI includes a plurality of entities. The more detailed depiction and explanation of ANI 110 is given to facilitate understanding of the architecture and operation of all of the ANI's in the network. All ANI's may be of the same architecture as ANI 110 but are not illustrated in the same degree of detail. ANI 110 includes one or more ANI adapters (ANI_AD), such as ANI_AD 112 (illustrated in detail) and ANI_AD 114, each of which preferably includes a timer 113 to provide a time stamp. Each ANI_AD performs header compression (prior to downlink traffic) and decompression (after uplink traffic). Headers (one or more header fields, such as a time stamp and sequence number) for RTP packets received from IP network 108 are compressed by ANI_AD 112 prior to transmission to terminals 130 and 150 over downlink traffic 142, and packet headers received from mobile terminals 130 and 150 are decompressed by ANI_AD 112 before transmission to IP network 108. ANI_AD 110 functions as a transmitter/receiver (transceiver) and specifically as a compressor/decompressor. 115 with the compressor compressing data packets prior to transmission and the decompressor decompressing data packets after reception. ANI_AD 110 interfaces with terminals located in a specific or different area within the region to IP network 108. ANI_AD 112 includes a timer 113 for implementing a timer-based decompression technique. ANI_AD 112 also includes a jitter reduction function (JRF) 116 which operates to measure the jitter on packets (or headers) received over the network 108 and discard any packets/headers which have excessive jitter.

Each terminal includes a plurality of entities. The more detailed explanation of the mobile terminal 130 is given to facilitate understanding of the design and operation of all mobile terminals 130 and 150 in the network which are of a similar design and operation. Each of the mobile terminals may also function as a compressor/decompressor in communications beyond ANI's 110 and 120 and specifically, with other networks. Mobile terminal 130 includes an RTP endpoint 132 which is a source (transmitter) and/or destination (receiver) for RTP packets and identifies the terminal's IP address, port number, etc. Mobile terminal 130 includes a terminal adapter (MS_AD) 136 which performs header compression (packets to be transmitted over uplink traffic 142) and decompression (packets received over downlink traffic 144). Thus, terminal adapter (MS_AD) 136 may be considered to be a header compressor/decompressor (transceiver) 137, similar to the ANI_AD compressor/decompressor. The terminology MS_AD has the same meaning as AD. The MS_AD 136 also includes a timer 134 (a receiver timer) for calculating an approximation (or estimate) of a RTP time stamp of a current header and to measure elapsed time between successively received packets to locate loss of packets during transmission to the terminal by wireless degradation such as fading. The MS_AD 136 may use additional information in the RTP header to refine or correct the time stamp approximation as described in copending Patent Application Serial No. 09/377,913. TThe time stamp approximation may be corrected or adjusted based upon a compressed time stamp provided in the RTP header. In this manner, a local timer and a compressed time stamp may be used to regenerate the correct time stamp for each RTP header.

RTP packets, including packets with compressed and uncompressed headers, are transmitted in the network such as, but not limited to, the exemplary network of Fig. 2 over a data link (such as wireless link 140) where bandwidth is at a premium and errors are not uncommon. The present invention is not limited to a wireless link, but is applicable to a wide variety of links (including wireline links, etc.).

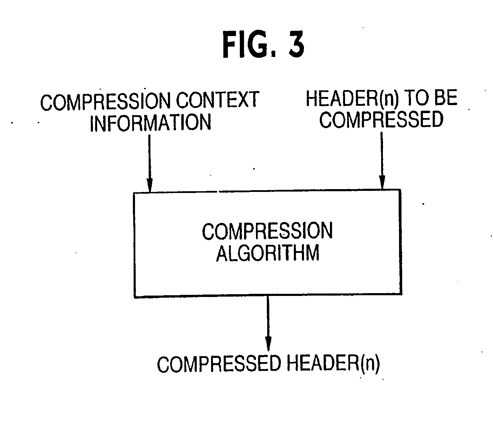

Fig. 3 illustrates conceptually compression context information and examples. Compression context information is a set, subset or representation of a subset of information which may be of any type in a header used by the compressor as an input to the compression algorithm to produce a compressed header and may be transmitted from one entity to another entity. The other input is from the header source of the headers to be compressed.

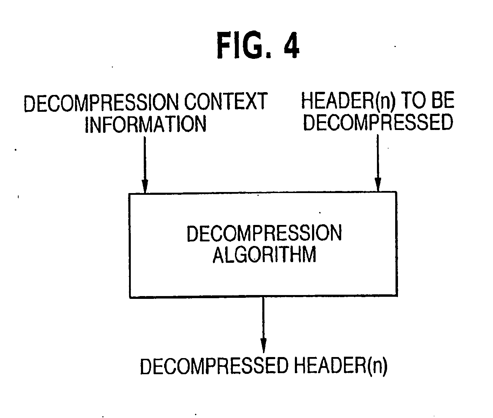

Fig. 4 illustrates conceptually decompression context information and examples. Decompression context information is a set, subset or representation of a subset of information which may be of any type in a header used by the decompression as an input to the decompression algorithm to produce a decompressed header and may be transmitted from one entity to another entity. The other input is from the header source of the headers to be decompressed.

Both the compression and decompression context informations are dynamic, that is, they may be updated by the compressor and decompressor respectively. The frequency of updates depends on the header compression scheme. Events that may result in an update of the compression context information at the compressor include the compression of an incoming header, or the receipt of feedback from the decompressor. Events that may result in an update of the decompression context information at the decompressor include the decompression of an incoming header.

Adaptive Header Compression (ACE) is a general framework for robust header compression that can be parameterized to account for the existence/non-existence and performance characteristics of a feedback channel. The framework includes three basic modes of operation:
- Bi-directional Deterministic Mode: This mode is used in the case where there is a 'well-defined' reverse channel, which can be used to carry various types of feedback information from the decompressor to the compressor. One example of such feedback from the decompressor is the ACKnowledgement, used, e.g., to advance from a lower compression state to a higher compressor state. By reception of ACKs via a well-defined channel, the compressor obtains the knowledge that some specific header has been received. The compressor takes advantage of that knowledge to compress more reliably and more efficiently.
- Bi-directional Opportunistic Mode: This mode of operation is used in the case where a reverse channel exists, but is loosely' defined, i.e., the channel may not always be available, or may be slow/unreliable. There are many important applications that are 2-way bi-directional. A primary example is conversational voice or video. In such cases, there is inherently a reverse channel, which can carry the feedback.
- Unidirectional Mode (Pessimistic or Optimistic): This mode of operation is used when there is no reverse channel of any kind. Because there is no feedback at all from the decompressor regarding its current state, the compressor must occasionally send some refreshment information to the decompressor, which can be used to re-establish synchronism in the event that something has gone wrong. Depending on various factors (e.g., channel conditions), that may be known to the compressor, the approach in this mode could be either pessimistic (more frequent refreshes) or optimistic (less frequent refreshes). In addition, there are events that can trigger the compressor to send FH information, to refresh the decompressor and reduce the chance of incorrect decompression.

The ACE compressor can be characterized as progressing through a series of states. The compressor leaves a lower compression state and enters a higher compression state when it has sufficient confidence that the decompressor has received some information.

In the case of RTP header compression, the states are Full Header, First Order, and Second Order states.
- Full Header (FH) State: The compressor enters this state when at initialization time or when some exceptional event (CPU crash or memory loss) occurs. In this state, the compressor essentially transmits FH header information to the decompressor. An FH header contains the complete set of all header fields, plus some additional information. This information can include compressor/decompressor specific data, such as the CID (Context Identifier, used to discriminate multiple flows). The compressor stays in this state until it has acquired sufficient confidence that the decompressor has received the FH header information. FH packets are the least optimal to transmit due to their large size (e.g., at least 40 bytes for IPv4, 60 bytes for IPv6). The compressor leaves this state and enters the FO state when it has sufficient confidence that the decompressor has correctly received an FH header. That confidence could come, e.g:, from receipt of an ACK from the decompressor or sending a predefined number of FHs.
- First Order (FO) State: The compressor enters this state when a new string starts, after it has left the FH state. In this state, the compressor essentially transmits FO header information. An FO header contains compressor/decompressor specific fields, and some information that describes irregular changes that have occurred in the essential changing fields. The compressor stays in this state until it has acquired sufficient confidence that the FO header information has been received by the decompressor. That confidence could come, e.g., from receipt of Acknowledgments from the decompressor or sending a predefined number of FOs.
- Second Order (SO) State: The compressor is in this state when the header to be compressed conforms to the pattern of a string, and the compressor is sufficiently confident that the decompressor has acquired the string pattern. In this state, the compressor transmits SO headers. An SO header contains essentially just a sequence number. The preferred mode of operation for the compressor/decompressor is transmission/reception of SO packets, due to their minimal size (on the order of just a few bits).
   In summary, a session starts with the compressor in the FH state. In that phase, the compressor sends a full header to the decompressor to establish a context in the decompressor. This initiates a string. The compressor then enters the FO, or SO states. In the FO state, it sends the necessary essential changing field update information to the decompressor. In the SO state, it sends minimal information to the decompressor. The decompressor does a simple extrapolation based on information exchanged in the previous FH and FO packets until the string ends. When another string starts, the compressor enters the FO state again, and the process repeats.

Bi-directional transmission modes utilize acknowledgments for various functions:
- to inform the compressor that FH information has been received; in that case, the compressor knows that the decompressor has acquired the information necessary to decompress FO headers and therefore the compressor can reliably transition to the higher compression state, FO; this kind of ACK is referred to as FH-ACK to inform the compressor that FO information has been received; in that case, the compressor knows that the decompressor has acquired the information necessary to decompress SO headers and therefore the compressor can reliably transition to the higher compression state, SO; this kind of ACK is referred to as FO-ACK to inform the compressor that a header with a specific number n has been received; in that case, the compressor knows that the decompressor can determine the sequence number without any ambiguity caused by counter wrap around up to header number n + seq_cycle, where seq_cycle is the counter cycle; the compressor can reliably use k bits for the header sequence number, without concerns of ambiguous or incorrect sequence number decoding at the decompressor; this kind of ACK is referred to as SO-ACK

The control of transition from FH to FO to SO states by Acknowledgments ensure that there is no error propagation. That is, a compressed header that is not received in error can always be correctly decompressed, because synchronization is never lost.

There is a lot of flexibility with respect to when and how often the decompressor sends the acknowledgments. ACE is also extremely resilient to ACKs being lost or delayed. The compressor constantly adapts its compression strategy based on the current information to be compressed and the ACKs received. For example, loss or delay of an FO-ACK may result in the compressor staying longer in the FO state. Loss or delay of an SO-ACK may result in the compressor sending more bits for the sequence number, to prevent any incorrect decompression at the decompressor caused by counter wrap around.

ACKs can be transmitted periodically or non-periodically. The frequency of non-periodic acknowledgments may be decreased or increased from a periodic rate. An ACK can be sent less frequently because ACKs are lost due to errors or network congestion, or ACKs cannot be transmitted due to the intermittent available of the reverse channel or some decompressor conditions. An ACK can also be transmitted more closely spaced than traditional periodic ACK. For example, when the reverse channel is very lightly loaded and available, the decompressor can transmit ACKs more often and as a result the compressor can operate more efficiently and reliably.

Consequently, the feedback channel utilized to transmit the ACKs can have very loose requirements. This is because ACKs only have an effect on the compression efficiency, not the correctness. Delay or loss of ACKs may cause the size of compressed headers to increase, but even in such cases the increase is logarithmic.

In the bi-directional deterministic mode, the transition from FH/FO to FO/SO is acknowledgment based. In the unidirectional mode, an ACK is never sent, so the number of FH/FO packets which are sent before transition to FO/SO state depends on a predefined or a dynamically/adaptively selected value. In the bi-directional opportunistic mode, the ACK may be late, so the transition from FH/FO to FO/SO is not strictly ACK-based, but depends on whichever comes first of 1) transmission of a predefined or dynamically/adaptively selected number of FH/FO, or 2) reception of at least one ACK.

In summary, the number of FO/FH packets to sent before switching to FO/SO state depends on whether an ACK is required before switching and/or a tunable parameter m that may be predefined or dynamically/adaptively selected. Four cases are discussed below.

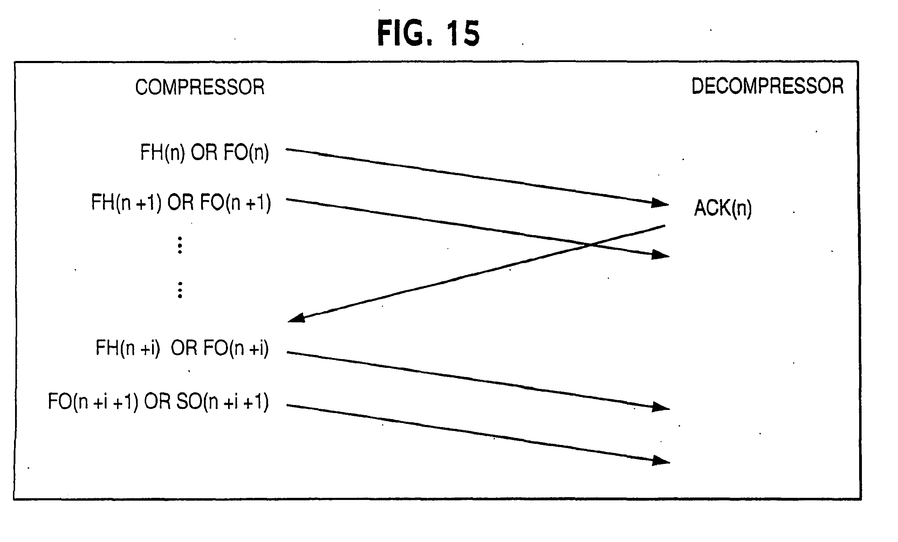

Fig. 15 illustrates switching of the state of compression of the compressor based only on arrival of an appropriate ACK. A sequence of at least one header of a particular state which, as illustrated without limitation are FH or FO headers, is transmitted to the decompressor. The decompressor, upon receiving the first header FH(n) or FO(n) (it could be a header other than the first header) transmits back an Ack(n) which, upon receipt, causes the compressor to transition into a higher compression state which, as illustrated, is FO(N+i+1) or SO(n+i+1) which is the packet transmitted immediately after the reception of ACK(n).

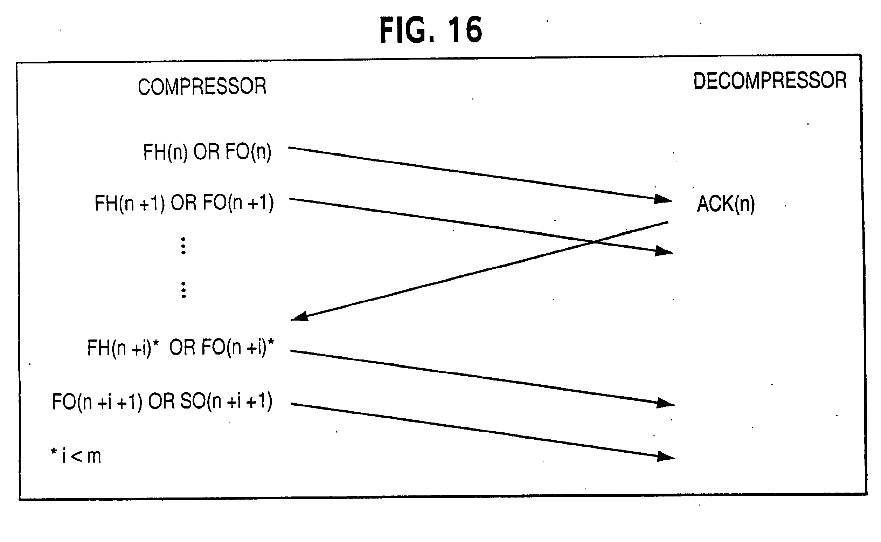

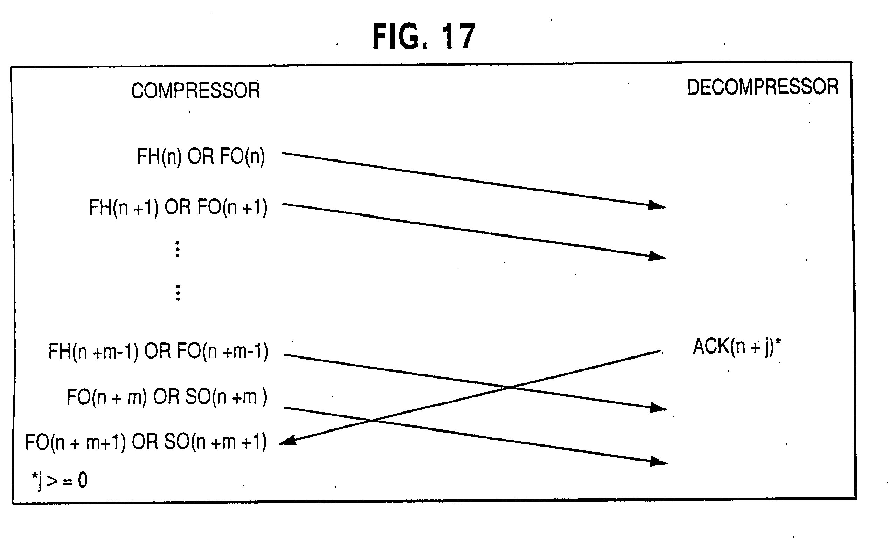

Figs. 16 and 17 illustrate switching of the state of compression of the compressor based on a parameter m which is a number of transmitted headers or ACK (switching access whenever m FO/FH headers are transmitted or ACK is received). The embodiment of Fig. 16 is not limited to FH/FO/SO header transmission by the compressor. In Fig. 16, an ACK(n) arrives before the number of FO/FH headers transmitted reaches m, which as the result of the preset number of headers FH/FO being transmitted, causes the compressor to switch to a higher state of compression and transmit packet FO(n+i) or SO(n+i). The embodiment of Fig. 17 is not limited to FH/FO/SO header transmission by the compressor. In Fig. 17, an ACK arrives after m headers are transmitted.

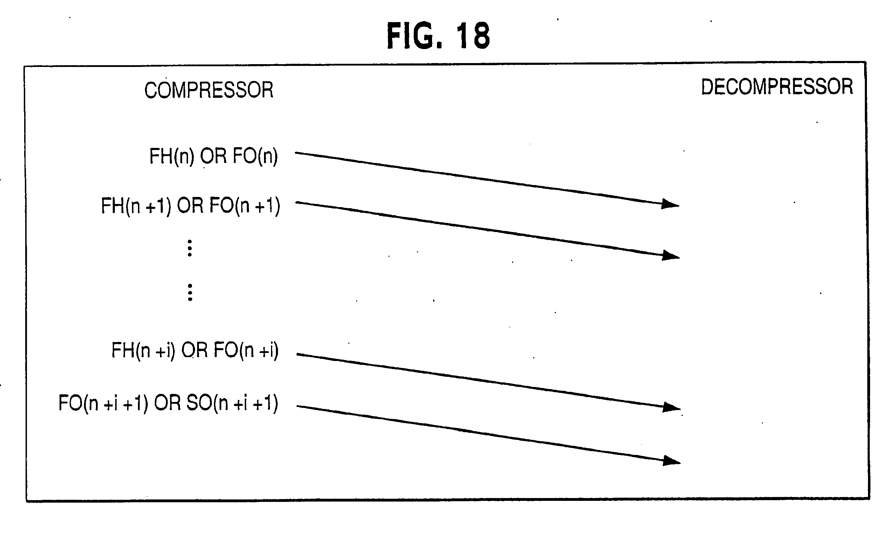

Fig. 18 illustrates switching of the state of compression of the compressor occurs after a set number of headers are sent without any acknowledgments.

Under different modes, the operation strategy of the compressor and decompressor are different.

### Operation Modes of the Compressor

- Strictly based on ACK: In this mode, the compressor strictly depends on the reception of the ACKs. If an ACK has not arrived on time due to loss, channel availability, decompressor conditions, etc., the compressor switches to a less compressed mode by for example increasing the length of the coding fields, and it only can switch back to a further compressed mode after it receives appropriate ACKs.
- Loosely based on ACK: In this mode, ACK helps to improve the efficiency and reliability when received, but the compressor doesn't strictly depend on the reception of the ACK. If the compressor receives an appropriate ACK, it switches from a less compressed state to a further compressed state or stays in the current state if it is already in the further compressed state. If it hasn't received an appropriate ACK, it switches from a less compressed state to a further compressed state based on other criterions, e.g., sending a certain number of less compressed headers, instead of the reception of ACK.
- Not based on ACK: The compressor normally operates in this mode when no reverse channel is available. In this mode, the criterion to transition from a less compressed state to a more compressed state is not ACK-based. Rather, the compressor may switch from a less compressed state to a more compressed state after a certain number of less compressed headers have been transmitted. Such number can be a tunable parameter. In addition, there are events that can trigger the compressor to send less compressed information in order to refresh the decompressor and reduce the chance of incorrect decompression.

### Operation Modes of Decompressor

- Sending deterministic ACK: In this mode, the decompressor sends ACKS periodically and when it receives FH/FO packets. In addition, the decompressor can send ACKs back to compressor more frequently than periodically when the reverse channel is light-loaded and available.
- Sending opportunistic ACK: In this mode, the decompressor doesn't strictly send ACKs periodically. It sends ACK only when it has an opportunity to send an ACK, e.g., when the reverse channel is available to carry the ACK.
- No ACK: In this mode, the compressor doesn't send ACKS at all.

One example application where the header compression and decompression scheme is useful is where Voice over IP (VoIP) (or IP-telephony) packets are transmitted over cellular systems. When VoIP is applied to cellular systems, it is important to minimize the overhead of the IP/UDP/RTP header due to the limited bandwidth of the wireless or air (RF) interface. In such a system for example, the ANI_AD interfaces the IP network to a computer terminal running RTP/UDP/IP (e.g., terminal 130) having a cellular or RF interface for receiving RTP packets over the wireless or RF link. This is merely one example application of the compression/decompression technique of the present invention.

### Definitions

n: Sequence number assigned by the compressor and carried in headers. The number n always increments by 1 for each new packet and independent of the RTP sequence number. Note that n may be coded in either k-bits ( = (CD_SN)k ), or ℓ_extended bits ( = (CD_SN)C_extended).
CD_SN 139: Internal counter corresponding to n. The compressor and decompressor maintain their counters. The size of the internal counters can be chosen large enough to avoid any ambiguity for the duration of the session, e.g.; 32 bits.
(CD_SN)k: k least significant bits of CD_SN. (CD_SN)k is normally sent in the compressed header.
(CD_SN)ℓ_extended: ℓ_extended least significant bits of CD_SN. (CD_SN)ℓ_extended is sent in the compressed header in the extended mode.
S_RFH: CD_SN of packet whose header is known to be correctly reconstructed by the decompressor; S_RFH is continuously updated by the compressor based on feedback from the decompressor. S_RFH is sent in the form of k or ℓ_extended least significant bits. N_elapsed: a counter maintained by the compressor to keep track the number of packets have been sent since the last ACKed packet. N_elapsed = current CD_SN - S_RFH, if S_RFH is always set equal to the last ACKed packet by the compressor when it receives an ACK. R_RFH: CD_SN of reference packet at the decompressor, which is set equal to S_RFH when an FO(n, S_RFH) packet is received.
SN(n): The RTP sequence number of nth packet sent by compressor. If the compressor does not do reordering, SN(n) is *not* necessarily a monotonically increasing sequence wherein n is defined by bit values of the k or ℓ extended bits.
TS(n): The RTP time stamp of nth packet sent by compressing.
CFO(n): Current first order difference at packet n. Note that it is a vector, with each of its individual component equal to the difference between the corresponding field in packet n and in packet (n-1); for example, the time stamp component of CFO(n) is calculated as TS(n) - TS(n-1).
FO_DIFF(n₂, n₁): First order difference at packet n₂, with respect to packet n₁. Each of its individual field is equal to the difference between the corresponding field in packet n₂ and in packet n₁; for example, the time stamp field of FO_DIFF(n₂, n₁) is calculated as TS(n₂) - TS(n₁).

N_Last_Interr: The CD_SN corresponding to the most recent interruption (i.e. non-linear change). It is updated (by the compressor) to n whenever CFO(n) != CFO(n-1). S_DFOD: Default first order difference at the sender. S_DFOD is a vector that specifies the current pattern. S_DOD is used by the compressor to determine if the current header conforms to the pattern. The current header n conforms to the pattern if header(n) = header(n-1) + S_DFOD. When the pattern does not change from one string to the next, S_DFOD is static. Otherwise, the compressor has to determine S_DFOD on a dynamic basis.
TS_DFOD and SN_DFOD: the components in S_DFOD corresponding to RTP time stamp and sequence number, respectively.
R_DFOD: Default first order difference at the compressor. R_DFOD is a vector that specifies the current pattern. R_DOD is used by the decompressor to decompress SO headers. When the pattern does not change from one string to the next, R_DFOD is static. Otherwise, the decompressor has to determine R_DFOD on a dynamic basis. By design, S_DFOD and R_DFOD are *always* equal during SO state.
Extended_flag: A flag maintained by the compressor. If it is TRUE, then ℓ_extended bits are used for the CD_SN and other sequence parameters will be sent in the headers. Otherwise, (CD_SN)k will be sent. Note that this flag itself is also carried in the headers so that the decompressor knows which coding of CD_SN is used.
Header(n): A term used generically to mean the header information sent by the compressor. Header(n) can be sent in various forms, FH(n), FO(n, S_RFH), SO(n), depending on the state of the compressor. Note that in the header, n is actually coded as (CD_SN)k or (CD_SN)ℓ_extended, depending the extended flag.
Diff(n₂, n₁): The *true* distance between n₂ and n₁ which are coded as (CD_SN)k or (CD_SN)ℓ_extended. Diff(n₂, n₁) = CD_SN(n₂) - CD_SN(n₁), where CD_SN(n₂) and CD_SN(n1) are the CD_SN corresponding to n₂ and n, respectively. For example, if the first packet carries (CD_SN)k = 14 and the second one carries (CD_SN)k = 1, then the true distance is (16 + 1 - 14) = 3, not (1 - 14) = -13.
FH_Req: Sent by the decompressor to request the compressor to operate in the FH state. This is used for example when the decompressor just recovered from a crash and no longer has reliable state information.
ACK(n): Sent in response to header(n). An ACK means that packet(n) is correctly received. Seq_cycle: Seq_cycle - 1 is the maximum number reached by the sequence number before wrapping around and going back to 0. Seq_cycle = 2^{k}.
SEQ Ext_cycle: = 2 ^{ℓ_extend}.
HSW 117: The compressor maintains a sliding window of headers sent to the decompressor (HSW): header(n), header (n+1), header (n+2), etc. The headers could have been sent in the form of FH, FO or SO. When the compressor receives an ACK(n), it will delete any Header(p) where p <n₂-n₁ and also move Header(p=n) to Header(S_RFH). Static fields do not need to be stored as multiple entries in HSW. Only a single copy of the static fields is needed. Note that in HSW, each header is marked with a color, either green or red.
Color of a header (packet): It is green if the CD_SN carried in the header (packet) is coded in k bits. Otherwise, it is red, e.g. ℓ extended bits. In implementation, a 1-bit flag can be used to store the color. The color is used to assist the compressor to uniquely identify a header when receiving an ACK.
OAW 135: The decompressor maintains a sliding window of headers it has successfully decompressed and ACKed: header (n1), header (n2), header (n3). Note that the ACKs are not known for sure to be received by the compressor. The window will be referred to as the outstanding Ack window (OAW). Static fields do not need to be stored as multiple entries in OAW. Only a single copy of the static fields is needed.
R_Last_Decomp: The CD_SN of the last reconstructed packet by the decompressor. The decompressor maintains the corresponding full header which is referred as FH(Last_Decomp).
Note:
The original IP, UDP and RTP headers are transferred, except for changes described below.
   - The Total Length field of IP header (2 bytes) is replaced with extended_flag (1 bit), seq_num (4 or 8 bits), and other optional information. If extended_flag is equal to 1, seq_num is 8-bit long, i.e. the packet is sent in extended mode.
   - The Length field in the UDP header (2 bytes) is also replaced with the context ID for header compression, referred as CID. The compressor can simultaneously compress multiple RTP flows independent of each other. Each flow is assigned a unique CID. In implementation, CID could be either 1-byte or 2-byte long, depending on the maximum number of RTP flows at any given time.

A first embodiment of the invention, which may be practiced with the system of Fig. 2, is based upon IP/CTDP/RTP fields most of the time being either constant or can be extrapolated in a linear fashion. In those instances, the compressed header just carries a multiple non extended sequence number having k bits that provides sufficient information for linear extrapolation. Like RFC 2508, with the invention when linear extrapolation results in incorrect header reconstruction, the transmitter sends FO difference information. Unlike RFC 2508, the difference information is calculated with respect to a reference packet known to be correctly received, rather than the one immediately preceding the current packet This feature ensures that the current header can be reliably reconstructed even if one or more past packets were lost. Since the header can be reliably reconstructed in that manner, there is no need to send a full header. The reference is determined and updated by the compressor of the receiver according to acknowledgments received from the decompressor.

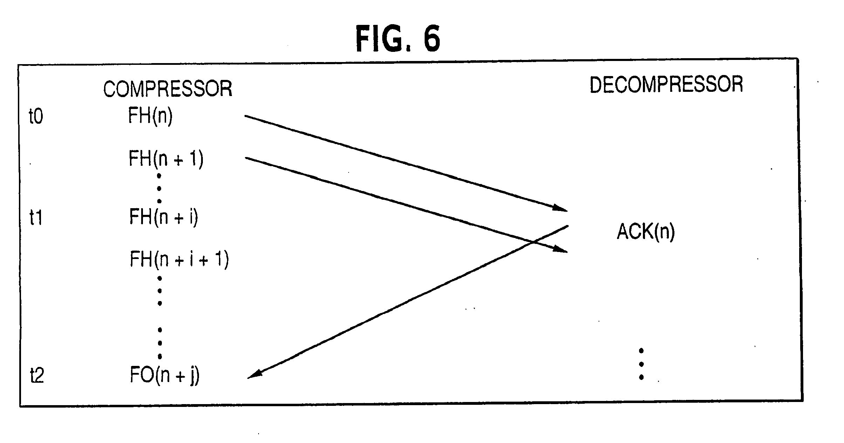

The compressor uses as a reference header a header which is known to be correctly decompressed based on received acknowledgments (ACKs) as illustrated generally in Fig. 6. The compressor sends a series of full header packets FH(n)...FH (n+i+1)...which cover a time sequence just prior to t₂ at which time the acknowledgment ACK(n) produced by the compressor receiving full header packet FH(n) is received. The transition from FH to FO (FO(n+j) as illustrated) is synchronous. The time sequence to t₂ is dependent on the round trip radio transmission time.

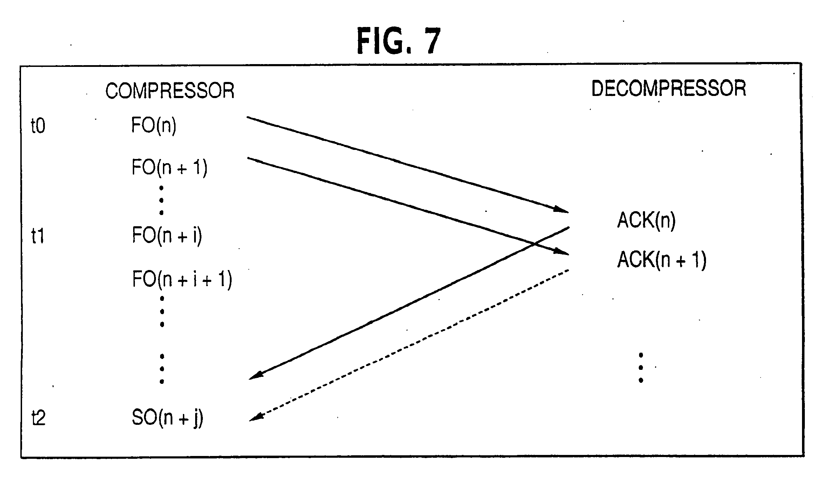

Fig. 7 illustrates the transition of the compressor from transmitting first order packets FO (FO(n), to FO (n+i+1)...with at least one acknowledgment ACK(n) and optionally ACK(n+1) being generated by the decompressor before the compressor synchronously transitions to the second order packets SO (SOn+j) with a round trip radio delay to time t₂ required for synchronization. The number of ACKs required by the compressor before transition from the FO state to the SO state is dependent on the variations between packets. For example, if the variation between packets is linear with constant parameters, only one ACK is required to transition from FO state to SO state. To be able to decompress the current header, the decompressor only needs to know the reference header instead of the immediately preceding header as with RFC 2508. In this scheme, the compressor sends full headers (FH type headers) at initialization. It sends first order difference information (FO type headers) when linear extrapolation does not apply. However, the compressor does not transmit SO difference headers until the preceding FH or FO has been acknowledged, and linear extrapolation applies.

At the compressor, the reference packet is defined to be the last one whose ACK has been received. Specifically, when the transmitter receives ACK(n), an acknowledgment for packet n, it will retrieve packet n previously stored in memory and save it as the reference packet (packet n was stored in memory when it was sent). Subsequently, all header compression is done with reference to that packet, until a new ACK is received, at which point the packet that has just been ACKed becomes the new reference packet. The memory in the transmitter where the potential reference packets are stored is referred to as the header sent window (HSW) depicted as entity 117 in Fig. 2. If a FO difference information has to be sent in the compressed header, the compressor will explicitly include the sequence number of the reference packet (reference sequence number).

At the decompressor, when an ACK(n) is sent, header(n) is stored in the outstanding acknowledgment window (OAW) depicted as entity 135 of Fig. 2. Subsequently, when a FO difference header is received, the decompressor will determine the reference packet from the reference sequence number, retrieve the corresponding reference packet from the OAW 135 and use it to reconstruct the full header.

The invention uses the linearity of RTP time stamps generated at the compressor which closely follow a linear pattern as a function of the time of the day clock. Based on the timer 134 maintained at the decompressor of the receiver and using an extended sequence number for FO packets defined by ℓ extended bits, all of a long loss within a threshold can be detected and recovered.

With speech being assumed, if the time interval between consecutive speech samples and packets is *t* msec, then the RTP time stamp of header n (generated at time n* *t* msec) equals the RTP time stamp of header 0 (generated at time 0) plus TS_stride * n, where TS_stride is a constant dependent on a voice codec of the voice source of the transmitter. Consequently, the RTP time stamp in headers received by the decompressor follows a linear pattern as a function of time, but less closely than the compressor, due to the delay jitter between the compressor and the decompressor. In normal operation (absence of crashes or failures), the delay jitter is bounded, to meet the requirements of conversational real-time traffic.

A string occurs as a sequence of headers that all conform to a particular pattern. Specifically, the RTP sequence number (SN) is incremented by 1 from one header to the next. The RTP time stamp (TS) is non decreasing, and follows some predictable pattern: If headers n₁ and n₂ are in the same string, the TS of header n₂ can be derived from the TS of header n₁ and the pattern function. The other field values, except perhaps for UDP checksum and IP Id, do not change within the string. Thus, once a header, e.g. n₁ has been correctly decompressed, the subsequent headers in the same string can be decompressed by extrapolation according to the pattern. Once the compressor determines that a header has been successfully decompressed, and the pattern acquired by the decompressor, it just has to send a k-bit sequence number, denoted (CD_SN)k, as a compressed header for the subsequent packets in the same string. (CD_SN)k are the k least significant bits of a larger (compressor) decompressor sequence number (CD_SN).

A further embodiment of the invention, practiced with the system of Fig. 2, uses the fact that the IP/UDP/RTP fields are either constant or can be extrapolated from a predictable pattern. In those instances, the compressed header just carries a non extended sequence number having k bits that provides sufficient information for extrapolation. When extrapolation would result in incorrect decompression for one or more fields, the compressor sends the required additional information for those fields (update information).

To provide robustness to errors and error bursts, the compressor encodes the update information with respect to a reference header known to be correctly decompressed. The compressor knows a header is correctly decompressed when it receives the corresponding acknowledgment. An ACK mechanism ensures that the current header can be reliably reconstructed even if one or more past headers were lost.

A string is defined as a sequence of headers that all conform to a particular pattern. The RTP sequence number (SN) is incremented by 1 from one header to the next. The RTP time stamp (TS) is non decreasing, and follows some predictable pattern. If headers n₁ and n₂ are in the same string, the TS of header n₂ can be derived from the product of sequence number offset p between n₂ and n₁ and TS and the pattern function. The other field values, except perhaps for a UDP checksum and IP Id, do not change within the string. Thus, once a header, n₁, has been correctly decompressed, the subsequent headers in the same string can be decompressed by extrapolation according to the pattern. Once the compressor is informed that a header has been successfully decompressed, and the pattern has been acquired by the decompressor (as evidenced by the ACKs), it just sends a sequence number, as a compressed header for the subsequent packets in the same string.

In the case of voice, the TS has a linearly increasing pattern. Thus the TS of header (n₂) can be calculated as: TS(n₂) = TS(n₁) + TS_stride * p, where TS_stride is the time stamp increment between two consecutive headers and p is the sequent number offset between packets n₂ and n₁. A silent interval breaks the linear relationship and causes a string to terminate. A new string starts with a new talk spurt.

Thus the compressor goes through three different phases: initialization, update and extrapolation. A session starts with an initialization phase. In that phase, the compressor sends full headers to the decompressor until an ACK is received. After the initialization is completed, when a string starts, the compressor of the transmitter enters an update phase, where it sends the necessary update information to the decompressor. Once the compressor receives an ACK or ACKs indicating the decompressor has acquired the information necessary to do the extrapolation, the compressor transitions to the extrapolation phase. In the extrapolation phase, the compressor only sends a sequence number as each compressed header, until the string ends. When another string starts, the compressor of the transmitter enters another update phase, and the whole process is repeated. The headers sent in the initialization, update and extrapolation phases are FH, FO and SO. FH, FO and SO all carry a sequence number incremented by 1 at each header sent by the compressor SO essentially consists only of that sequence number. In the following, the ACKs sent in response to FH and FO are called FH ACK and FO ACK respectively.
Long error burst and loss of synchronization - Periodic ACKs

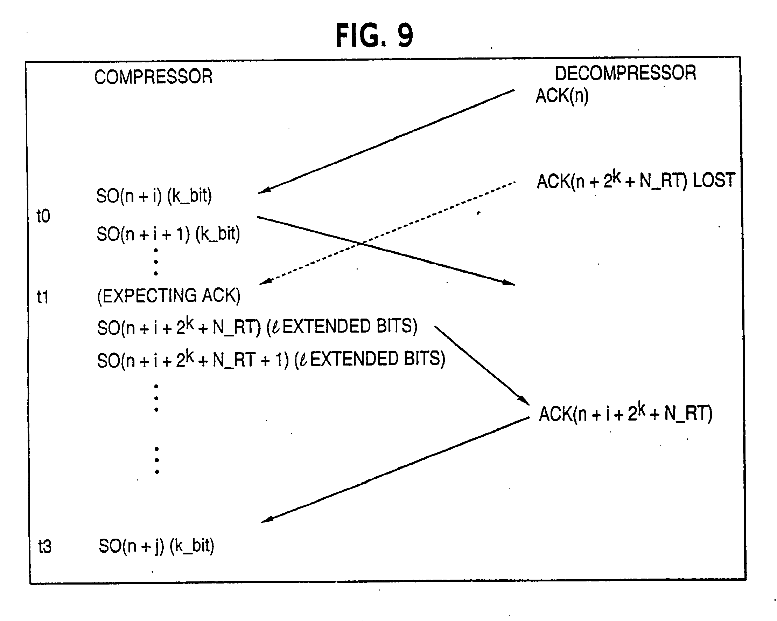

If the above sequence number is coded with k bits, it will wrap around every seq_cycle headers (seq_cycle = 2^{k}). Therefore, if an error burst lasts longer than the duration of seq_cycle headers, the decompressor cannot unambiguously determine the number of elapsed headers just from the sequence number, and consequently cannot perform proper decompression. To address this wrap-around and long burst problem, periodic acknowledgments (ACKs) are used. Fig. 9 illustrates the operation of the invention using the k bit sequence numbers and ℓ bit extended bit numbers in association with periodic acknowledgments (ACKs) which are synchronously generated by the decompressor on every detected 2^{k} received packets. Assuming the compressor receives the ACK(n) for packet n before it sends SO packet n+i with a k bit sequence number, the compressor is expecting another ACK for packet (n+2^{k}+N_RT) from the decompressor before it sends packet (n+i+2^{k}+N_RT). Assuming ACK(n+2^{k}+N_RT) is lost during the transmission, the compressor transfers to the extended state using ℓ bits and sends packet (n+i+2^{k}+N_RT) with an ℓ extended bit sequence number. When the decompressor receives the packet (n+i+2^{k}+N_RT) with an ℓ extended sequence number, it sends an ACK (n+i+2^{k}+N_RT) back to compressor. When the compressor receives the ACK(n+1+2^{k}+N_RT), it transfers back to non-extended state, and sends packet SO(n+j) with just a k-bit sequence number. The decompressor is expected to send an ACK at regular intervals, spaced closely enough so that normally the compressor receives an ACK at least once every 2^{k} seq_cycle headers. The compressor maintains a counter, N_elapsed, to keep track of the number of packets elapsed since the last ACK it received. If N_elapsed >2^{k} seq_cycle headers, the compressor operates in extended mode, where ℓ_extended bits, rather than a smaller number of non extended k bits are used for the sequence number, with the number of ℓ_extended bits > the number of k non extended bits. The ℓ_extended-bit sequence number and the reduced number of k bits in the non extended sequence number can be seen as the least significant bits of the non extended sequence number and ℓ_extended bits being the least significant bits of the count CD_SN 139 of the transmitter. They are denoted (CD_SN) k and (CD_SN) ℓ_extended respectively. N_elapsed will increment by 1 for each packet sent by the compressor. The sequence number SN only decreases when the compressor receives an ACK from the decompressor, and allows the compressor to switch back to the normal mode, i.e. use the present number of least significant bits of CD_SN. These ACKs are referred to as periodic ACKs. ACKs may be non-periodic as described below when, for example, the channel on which the ACKs are sent is busy which requires the ACK to be delayed in a non-periodic manner.

To account for the round trip delay, the decompressor of the receiver needs to anticipate when to send a periodic ACK. The decompressor has to send a periodic ACK early enough so the compressor normally receives ACKs at least once every seq_cycle. Taking into account the round trip time, the decompressor has to send ACKs at least once every (seq_cycle - N_RT) headers. The quantity N_RT is calculated as EST_RTT/T_H, rounded up to the next higher integer. The quantity EST_RTT is an estimate of the current round trip delay calculated by the decompressor and can be either evaluated dynamically based on recent measurements, or simply set to RTT_n (defined below). In practice, T_H can be derived either from the codec characteristics of the transmitter, or from the actual spacing observed.

### Assumptions

In order to ensure correctness and achieve high performance, some assumptions need to be made about the communications channel between the compressor and the decompressor (CD-CC). The channel could be a link or a concatenation of links (network or networks).

Packets transferred through the forward and reverse channel may be lost or corrupted, but their orders are maintained (i.e., FIFO pipe). The quantity MAX_EB is defined as the maximum number of consecutive packets that could be lost over the CD-CC. In practice, for cellular links, MAX_EB is enforced by the lower layers of the protocol stack which decide to drop the connection when a threshold of consecutive lost packets is reached.

The channel may perform fragmentation at and reassembly at the decompressor, but preserves and provides the length of packets being transferred. Note that this fragmentation is different from IP fragmentation.

This scheme assumes there is a mechanism to detect errors between the compressor and decompressor. It is assumed the channel provides that error detection. If no error detection is available from the channel, the scheme can be extended in a straightforward fashion by adding an error detection code at the compressor-decompressor level. Error correction is beneficial but optional.

The round-trip delay between the compressor and decompressor is defined as the time to send and process a header(n), to process it, and return an ACK(n). To avoid any ambiguity on which original message is being ACKed, the ACK must not experience a round trip delay so long that the (CD_SN)ℓ_extended in the forward direction has wrapped around. It is reasonable to assume that the time to send header(n) and process it are bounded, due to the real-time traffic requirements. The time to return ACK(n) depends on the reverse channel used to transmit it. For example, if the channel is contention-based, it may experience queuing delay. The lower layers are assumed to enforce a delay limit on the transmission of ACK, if necessary by discarding those ACKs which have stayed in the queue for too long. Based on these considerations, it is assumed there is an upper bound of the round trip delay: RTT_UB. In addition, there is a nominal round trip delay, denoted RTT_n, which is the most likely round trip delay during normal operation. Obviously RTT_n < RTT_UB. Estimation of RTT_n should be made before implementation, since RTT_n is used to determine the optimal value of k (see below for explanation). Note that at run time, the receiver needs to estimate the actual round trip delay. Details are discussed below.

Based on assumption 1 and 4, to guarantee the correctness of the proposed scheme, the value of ℓ_extended should satisfy the following conditions:
1. 2^{ℓ_extended} * T_H ≥ RTT_UB, where T_H is the time spacing between two consecutive headers; this is required to avoid ambiguity on the ACK
2. 2^{ℓ_extended} > MAX_EB; this is required to maintain sequence synchronization even when long bursts occur

There is some flexibility to choose the value of ℓ. However, in order to achieve optimal performance, it should be fine tuned based on the distribution of channel error bursts (both forward and reverse direction) and the round trip delay. Following are some considerations:
3. 2^{k} * T_H ≥ RTT_n, to reduce the chance of the compressor switching to the extended mode due to late ACKs.
4. 2^{k} > the most likely number of consecutive packet losses. This is needed to reduce the chance that the compressor switches to the extended mode due to long error bursts.
5. K should not be too small. Otherwise, too many periodic ACKs will be sent from the decompressor to the compressor, causing flooding of the reverse channel and lowering of the compression efficiency. On the other hand, a large value of k will result in overhead carried in every header.
The basic concept is that, when the channel condition deteriorates, the compressor and the decompressor fallback using (CD_SN) ℓ_extended bits to guarantee correctness. On the other hand, it will use shorter (CD_SN) k bits during normal channel conditions to achieve best efficiency. Details of switching between the two modes are discussed below.

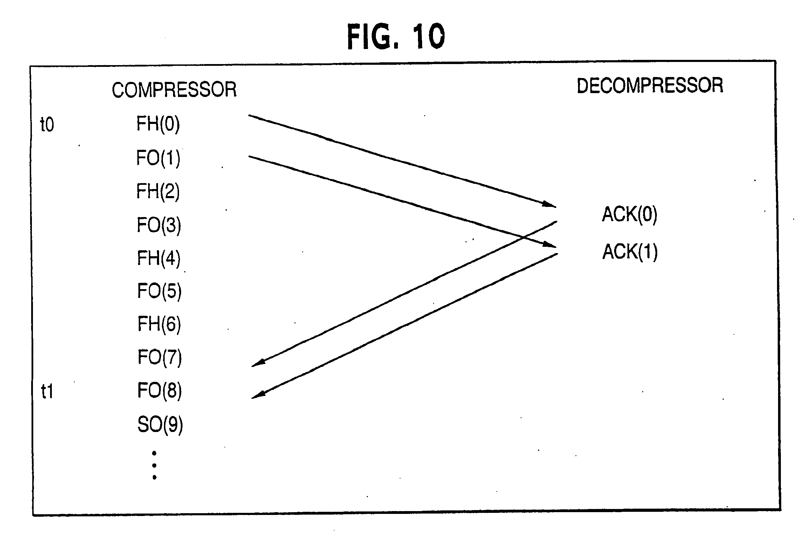

Fig. 10 illustrates a bandwidth reduction embodiment which sends at least one sequence of data packets, which transition in each sequence between different states of header consumption, from the compressor to the decompressor before an acknowledgment (ACK), generated by the decompressor, is received by the compressor to cause the compressor to transition the header compression to a greater degree of header compression. Because the compressor periodically, before receiving any acknowledgment, transmits headers with at least some compression, the resultant smaller number of bits transmitted before receiving an acknowledgment saves bandwidth. In the initialization phase, the compressor may, without limitation, alternate between full headers (FH) and first order headers (FO), i.e., a set of FH, then a set of FO, then a set of FH, then a set of FO, and so on, until an ACK is received. The sets may each include at least one header. The decompressor transmits an ACK when it correctly receives a FH. In Fig. 10, the alternate FH and FO headers are transmitted one after another, i.e., FH(0), FO(1), FH(2), FO(3), until the compressor receives the ACK (0) for packet 0 and uses the FH(0) as reference header from then on for decompression.

### Multiple extrapolation

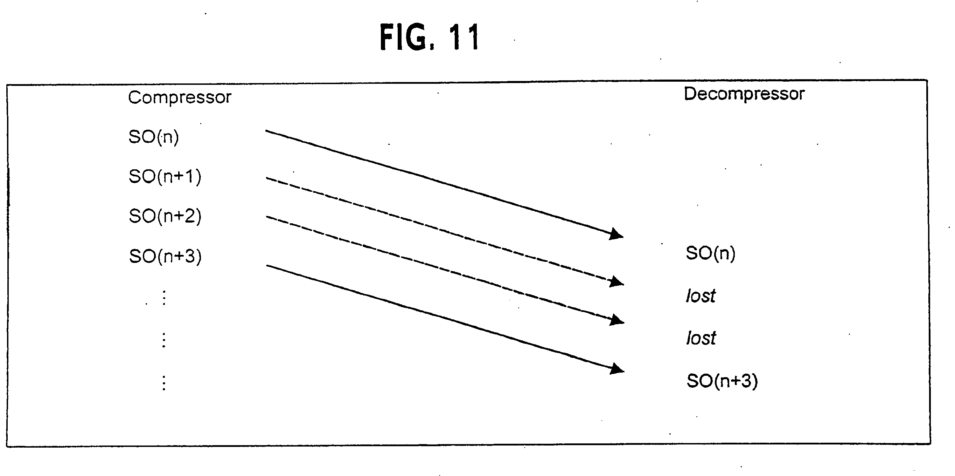

Fig. 11 illustrates an embodiment of the invention in which the decompressor performs multiple extrapolation. When one or multiple consecutive SO headers belonging to a string are lost or corrupted, the decompressor can decompress subsequent SO headers by applying an extrapolation function a necessary number of times. As shown in Fig. 11, it is assumed SO(n+1) and SO(n+2) are all lost. Let the corresponding changing value in SO(i) be X(i), then X(n+3) can be regenerated. In the case when the extrapolation function is linear and the offset between two consecutively sent packets is X_Stride, regeneration of SO(n+3) is performed by applying an extrapolation function two times based on SO(n), i.e., X(n+3)=X(n) + X_Stride *((n+3)-n).

In the case when the extrapolation function is not linear and varies in a non-linear pattern(s), the decompressor can regenerate the headers according to the non-linear pattern(s). For example, if a changing value of X between consecutive packets falls into pattern X_Stride1, X_Stride2, X_Stride1, X_Stride2, and so on, then the decompressor regenerates X(n+3) as X(n+3)=X(n)+(X_Stride1+X_Stride2).

Examples ofX could be the time stamp and sequence number in the RTP header with multiple extrapolations using different extrapolation functions being used. A function of an extrapolation function is, for example, a product of different constants and a constant extrapolation function.

Each header arriving at the compressor of the transmitter can be modeled as a multi-dimensional vector with each component being equal to the value of a changing field in the header. For example, if the RTP sequence number SN and the RTP time stamp are the only changing fields in a header, each header to be compressed corresponds to a point in the 2-D space. Therefore, with the passage of time the compressor simply observes a sequence of points in this multi-dimensional space.

The coordinates of a point can be derived by applying a multidimensional extrapolation function to the immediately preceding point in the sequence. The extrapolation function may vary from packet to packet (or point to point in the space). However, if it stays the same for a sub-sequence of points, that sub-sequence becomes a string. Note that the extrapolation function may have any characteristics, though typically they are linear.

The concept of the string can be further optimized by the decompressor performing multiple extrapolation. When one or more consecutive SO headers belonging to a string are lost or corrupted between the compressor and decompressor, the decompressor can still decompress subsequent SO headers by applying the extrapolation function the necessary number of times.
The number of times is determined by the jump in CD_SN. Note that the synchronization in the CD_SN is maintained when the counter has wraparounds.

If one or multiple SO headers are corrupted during the transmission, the decompressor may be able to repair the corrupted headers based on the previously and currently correctly received headers and extrapolation functions. When the decompressor receives packets with corrupted headers, it buffers the corrected packet rather than discarding the corrected packet. After the decompressor receives the next packet without corruption, the decompressor compares the number of packets buffered therein and the sequence number offset between the current correctly received packet and the previous correctly received packet. If the sequence number offset matches the number of packets it buffered, and all of these packets are in the same string, then the decompressor can recover the corrupted headers based on the known extrapolation function(s).

As illustrated in Fig. 11, assuming that the extrapolation function for value X in the header is linear and the offset between two consecutively sent packets is X_Stride, when decompressor receives SO(n+1) and SO(n+2) with corrupted headers, the decompressor buffers the packets and waits for the next packet. When the decompressor receives SO(n+3) and observes that the sequence number offset between current correctly received packet SO(n+3) and previous correctly received packet SO(n) is 2 and the number of packets buffered therein between these two packets are 2 as well, the decompressor can regenerate value X of the two packets with corrupted headers as X(n+1)=X(n)+X_Stride and X(n+2)=X(n)+2*X_Stride. Examples of value X can be time stamp and sequence number in RTP header. This process has applications in which delay can be tolerated such as with streaming.

Another enhancement is compressor sequence number compensation. The compressor performs sequence number compensation when the RTP sequence number of the header to be compressed does not increase by 1 (increases by more than 1 or decreases), but the compressor determines that the header still belongs to the same string as the previous string. This happens when some headers in a string are lost or misordered on the way to the compressor. In that case, the header is compressed as an FO header, but only an RTP sequence number difference SND is sent as update information. SND = (actual RTP SN of the compressed header) - (RTP SN of the header obtained by straight extrapolation from the CD_SN). SND allows the decompressor to determine the correct RTP sequence number. For example, consider the sequence of headers with RTP Sequence Number = 5, 6, 7, 8 and 9 all belonging to the same string. On the way to the compressor of the transmitter, headers 7 and 8 are lost. Consequently, the compressor sees an increment of more than 1 when header 9 is received. However, from inspection of the uncompressed fields, the compressor of the transmitter determines that header 9 belongs to the same string as header 6. Assume header 6 was compressed with CD_SN = 3. Now header 9 is compressed with CD_SN = 4, since CD_SN is always incremented by 1. The compressor of the transmitter also sends a SND = 9 - 7 = 2. The decompressor of the receiver adds SND to the CD_SN, then applies the normal decompression algorithm for SO.

In a case of misordering only (no packet loss before compressor), there will be a sequence of SO headers with SNDs, but eventually the SND will become zero. Once the SND is zero, no SND is needed in the compressed header, and the compressed header is just a normal SO. If packets are lost before they reach the compressor of the transmitter, the SND will not go to zero. The SND needs to be carried in each header until the compressor receives an acknowledgment from the decompressor. Otherwise, if the header containing the SND is lost, the decompressor cannot decompress correctly.

Fig. 12 illustrates an embodiment of the invention in which compressor sequence number compensation occurs when the RTP sequence number of the header to be compressed doesn't increase by 1 due to packet loss, and the compressor determines that the header still belongs to the same string as the previous one. It is assumed in this example, packets with RTP sequence number N+1, N+2, N+3 are all lost. The compressor only receives packets with RTP sequence number N and N+4, with N and N+4 belonging to the same string. When the compressor sends the compressed header for the packet with the RTP sequence number N+4, in addition to short sequence number n+2, the compressor also needs to send an RTP sequence number difference SND which in the example equals to (N+5)-(N+2). When the decompressor receives such packet, it adds the SND to the CD_SN to derive the correct sequence number, then applies the normal decompression algorithm for SO.

Fig. 13 illustrates using error detection and regeneration of error detection code to limit transmission bandwidth. It is assumed in the following description that an error detection mechanism, such as a UDP checksum (2 bytes), is not transferred over the communication channel between the compressor and decompressor as the (CD_CC). This is not an issue if the UDP checksum is not used by the end application. If the end application uses the UDP checksum, and it is necessary to send the UDP checksum end-to-end, the embodiment can be extended in a straightforward fashion by adding the uncompressed UDP checksum in each compressed header. However, even if the UDP checksum is not sent as the CD_CC, some information related to the UDP checksum can be conveyed to the compressor.

One option is to split the end-to-end UDP checksum into two parts: the segment between the source and the compressor is referred to as the upstream segment and the segment between the compressor and the decompressor is referred to as the downstream segment. The error detection process using the checksum may be only carried out in the upstream segment. Before sending a UDP packet, the compressor checks if the checksum is consistent with the data and the compressor compresses the packet. If it is not, the packet will be discarded or the packet is sent with the checksum discarded and an error flag added which informs the decompressor that the received packet contains erroneous data with the discarding of the error detection bits in the form of the checksum (or other error detection bits) prior to transmission thus saving transmission bandwidth. The decompressor relies instead on the error detection capabilities of the CD_CC. If no error is reported to the decompressor, the decompressor recalculates the checksum after de-compressing the packet.

The above solutions work only if there is an error detection mechanism in the CD_CC and has the same or greater capability than the UDP checksum.

Before compressing a packet, the compressor checks if the checksum is consistent with the data. If it is, as stated above, the compressor compresses the packet without including the checksum in the compressed packet and transmits the compressed packet to the decompressor. If it is not, the compressor may discard the packet, or transmit the packet with checksum, or transmit the packet without checksum but with or without error indication.

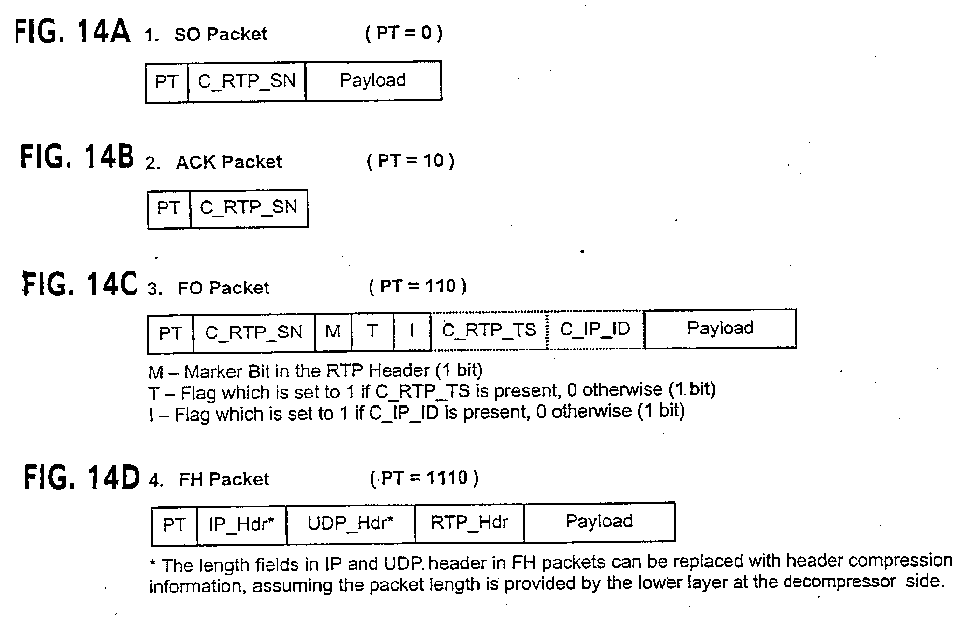

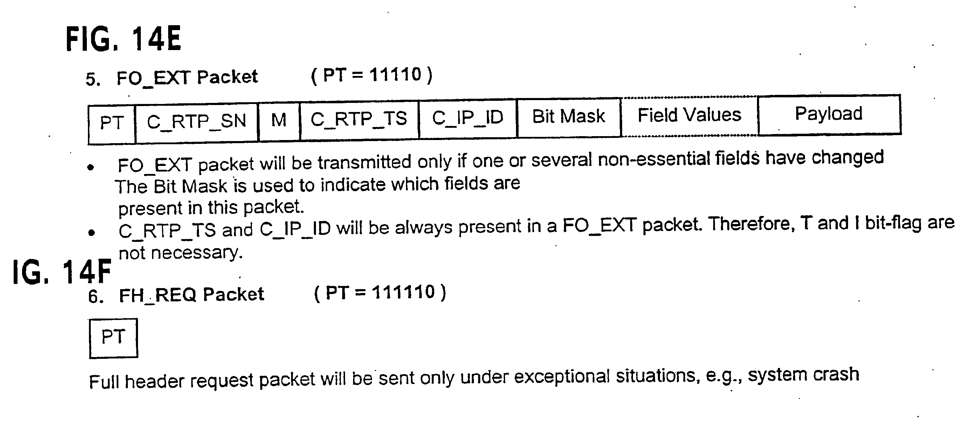

Figs. 14A-F illustrate an example of the format of SO, ACK, FO, FH, FO EXT and FH REQ packets which may be used with the practice of the present invention. The following abbreviations apply: PT is the packet type, C_RTP_SN is the compressed RTP sequence number, C_RTP_TS is the compressed RTP time stamp and C_IP_ID is the compressed IP_ID. However, it should be understood that the present invention is not limited thereto. The PT field for the SO packet may be encoded as 0, the ACK packet as 10, the FO packet as 110, the FH packet as 1110, the FO_EXT packet as 11110 and the FH_REQ packet as 111110. In the FO and FO_EXT packets, M is a one bit marker in the RTP header. In the FO packet, T is a one bit flag which 1 if C_RTP_TS is present and zero otherwise and I is a one bit flag which is set to I if C_IP_ID is present and is zero otherwise. In FH packets, IP and UDP headers can be compressed if the packet length is provided by a lower layer at the decompressor. The FO_EXT packet is transmitted only if several non-essential fields have change; the bit mask is used to indicate which fields are present and C_RTP_TS and C_IP_ID is always be present making T and I bit flags not necessary. Finally, the FH_REQ packet is sent only under exceptional circumstances, such as a system crash.

A context identifier (CID) field may need to be added to each of the above headers if multiple RTP flows are compressed and the lower layer does not provide differentiation among flows. The CID may only be needed for one direction, such as in a cellular system when the mobile station (MS) has only one RTP flow in each direction, and CID is not needed for downlink traffic (including ACKs). The quantity CID must be included for uplink traffic (including ACKs) since the decompression at the network side always handles multiple flows.

The following is an example of pseudo code which may be used to write code for the compressor.

This example illustrates the case where two ACKs are needed to transition from the update phase to the extrapolation phase. For simplicity, the alternation of FH and FO packets, as illustrated in Fig. 8 and the sequence number compensation are not shown in the pseudocode.

In this example, S_DFOD and R_DFOD are assumed non-static. They are therefore determined by the compressor and decompressor on a dynamic basis as follows:
The quantity S_DFOD is calculated as CFO(m) when the compressor received ACK(n) and ACK(n-p) and (n-p) ≥ N_Last_Interr. Note that p is not necessarily equal to 1.

- The decompressor calculates R_DFOD when it receives the first SO packet after a non-SO packet. The quantity R_DFOD is calculated by using a linear extrapolation based on the last two acknowledged headers stored in OAW 135.

The compressor's behavior can be modeled as a state machine, specified by the table below.

To address the counter wrap-around and long error burst problem, the compressor expects to receive an ACK at least once every seq_cycle headers, and maintains an extended flag. If the flag is true, the compressor shall operate in the extended mode, i.e. send (CD-SN)ℓ_extended. Otherwise, it sends (CD-SN)k. The extended flag is set to true whenever N_elapsed > seq_cycle. Otherwise, it is set to false. Note that N_elapsed keeps increasing unless the transmitter receives an ACK (refer to pseudo code for details). In the extended mode, if ext_cycle have elapsed without an acknowledgment, the transmitter transitions to FH state.

The compressor enters the SO state when at least two packets with CD_SN≥ N_Last_Interr have been acknowledged. Then it sets S_DFOD equal to the most recent CFO.

Initially, the compressor starts the session in the FH state. The HSW 117 is empty. The quantity N_elapsed is set to zero. Extended_flag is set to false.

Extra procedures need to be executed in the case of handoff. For simplicity, they are not included here.

### FH state

| Event | Action |
|---|---|
| receive ACK(n) for FH(n) | **•** *see* compressor processing ACK(n) *pseudo code* |
| | **•** state ← FO STATE; |

In the FH state, the procedure to send header(n) is

```
 {
        calculate CFO(n) and update N_Last_Interr;
        send as FH(n);
        store header(n) in HSW, color B red; /* n in FH is coded in
        k_extended bits */
        }
```

### FO state

| Event | Action |
|---|---|
| receive ACK(n) for FO(n, m) | • *see* Compressor processing ACK(n) *pseudo code* |
| Receive FH_Req | • state ← FH STATE; |

In the FO state, the procedure to send header(n) is

```
 {
       calculate CFO(n) and update N_Last_Interr;
       if N_elapsed >= seq_cycle
               extended_flag B TRUE;
       else
               extended_flag B FALSE;
       if N_elapsed >= ext_cycle
        {
               send FH(n), store header(n) in SHW, color B red;
               state β FH_STATE;
               N_elapsed B 0;
       }
       if received more than two ACKs, AND the most recent two CD_SNs ACKed >=
       N_Last_Interr
               S_DFOD B CFO(n);
               send SO(n), store header(n) in HSW, color B current_color(); /* see
               function below */
               state B SO_STATE;
       }
       else
               send FO(n, S_RFH); store header(n) in HSW, color B current_color();
       N_elapsed B N_elapsed + 1;
 }
       current_color() {
       if extended_flag = TRUE
               return red;
       else
               return green;
 }
```

### SO state

| Event | Action |
|---|---|
| Receive ACK(n) | • *see* compressor processing ACK(n) *pseudo code* |
| Receive FH_Req | • State ← FH STATE |

In the SO state, the procedure to send header(n) is

```
 {
       calculate CFO(n) and update N_Last_Interr;
       if N_elapsed >= seq_cycle
               extended_flag B TRUE;
       else
               extended_flag B FALSE;
       if N_elapsed >= ext_cycle
        {
               send FH(n), store header(n) in SHW, color = red;
               state B FH_STATE;
               N_elapsed B 0;
       }
       if CFO(n) = S_DFOD
               send SO(n); store header(n) in HSW, color B current_color();
       else
        {
               send FO(n, S_RFH); store header(n) in HSW, color B current_color();
               state B FO_STATE;
       }
       N_elapsedBN_elapsed+ 1;
 }
```

### Compressor processing ACK(n)

```
 {
       if color of ACK(n) is green /* n is coded in k bits */
               h_ack β a green header in HSW 117 whose (CD_SN)k = n; /* see below for
               detailsr */
       else /* n is coded in k_extended
       bits */
               h_ack β a red header in HSW 117 whose (CD_SN)k_extended = n;
       S_RFH β CD_SN of h_ack;
       Delete all headers in HSW precding (older than) h_ack;
       Move h_ack to Header(S_RFH);
       N_elapsed β Diff(current|CD_SN, S_RFH): |
 }
```

It can be proved that in the bove procedure, one and oly one header in the HSW 117 can be correctly identified as the header being ACKed, in other word(s), there will be no ambiguity of the ACK. If the ACK(n) is red, i.e., n is coded using ℓ_extended bits, only one red header can match the ACK, since there are at most 2^{ℓ_extended} headers in the HSW 117. Otherwise, if the ACK(n) is green, we will show that it can still be uniquely map to a green header in HSW 117.

Assume a snapshot of the HSW 117 is taken every time after the compressor sends a packet, and represents it with a string of letter Rs (for red headers) and Gs (for green headers). Let S be the string corresponding to an arbitrary snapshot. Note that S starts with the oldest packet sent by the transmitter, and ends with the youngest one. Furthermore, between the sending of two consecutive packets by the compressor, the string S does not change unless an ACK arrives during the time, which will some letters from the beginning of the S.

Now, let G1 denote the rightmost (youngest) G in S, and S1 as the prefix of S up to (including) G1. Then there are only two possible cases, as shown below.

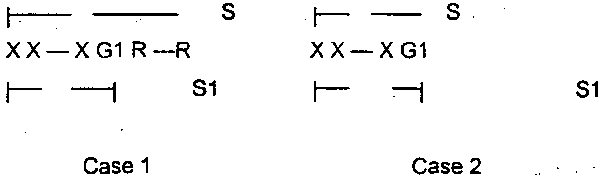

Let len(S1) denote the length of S1. In case 1, since there is an R after G1, len(S1) must be equal to seq_cycle (=2^{k}). Otherwise, the compressor would not have sent the packet after G1 as a red one. In case 2, len (S1) ≤ seq_cycle must be true. Otherwise, the compressor would have sent G1 as a red one. Therefore, in either case, len(S1) is less or equal to seq_cycle.

Since G1 is the rightmost green letter in S, it is proven that at most 2^{k} green header can exist in HSW 117 at any time. Thus, when a green ACK is received by the compressor, the k-bit CD_SN in the ACK can be used to uniquely identify a green header in the HSW.

Note that the decompressor must cooperate with the compressor to ensure that synchronization of CD_SN is maintained during the transition between the two modes. First, if the decompressor receives a red packet and it decides to ACK that packet, it must send a red ACK carrying (CD_SN)ℓ_extended.

Second, if the decompressor receives an FO packet, FO(n, m), the correct reference header must be the youngest (most recent) header in OAW 135, whose least significant k (if m is k-bit) or ℓ_extended (if m is k_extended-bit) bits match m. Note that this relies on the assumption that, in each direction, the channel behaviors like a FIFO.

Fig. 19 illustrates the second condition. In this example, NT0 and NT2 are the values of CD_SN at time T0 and T2, respectively. Suppose at T1, the compressor sends packet ACK(NT0), in which NT0 is coded in ℓ_extended bits. At T2, the compressor receives the ACK(NT0). It then calculates N_elapsed equal to (NT2-NT0) and finds out that N_elapsed<seq_cycle. At the same time, a RTP packet arrives at the compressor and the compressor decides to send it as an FO packet, using header(NT0) as reference. Since N_elapsed<seq_cycle(=2^{k}), the NT2 and NT0 in the FO packet are coded in k bits. At T3, the FO arrives at the decompressor. To retrieve the correct reference header, the decompressor simply searches its OAW from tail (the most recent) to head (the oldest), and finds the first header whose least significant k bits of its CD_SN match (NT0)k.

Note that at T3, the OAW 135 of the decompressor may contain more than 2^{k} headers. However, the above operation always gives the correct reference header. Because of the FIFO property of the forward channel, whatever received (and thus Acked) by the decompressor between T1 and T3, must be sent by the compressor between T0 and T2. In other words, if A denotes the set of the headers in OAW 135 that were added after header (NT0), and B the set of headers in HSW 117 at T2, then A ⊆ B always holds. Since |A |<2^{k}, we have |B |<2^{k}. Therefore, there are no two headers in set B such that the least significant k bits of their CD_SNs match (NT0)K in the packet FO(NT2, NT0).
The following is an example of pseudo code for the decompressor:
The decompressor is mostly driven by what is received from the compressor (i.e. FH, FO or SO).

In what follows, "correctly received" means no error is detected in the received header (either FH, FO or SO). Besides aforementioned state information, the decompressor also maintains a copy of the last reconstructed header, i.e., header (R_Last_Decomp). When receiving an FO packet the decompressor will use the procedure described above with reference to the pseudo code of the compressor to retrieve the correct reference header.
If FH(n) is correctly received

```
 {
       reconstruct header(n) from FH(n);
       send ACK(n);
       R_Last_Acked-n;
       store header(n) in the OAW 135 and also header(R_Last_Decomp);
 }
```

if FO(n, m) is correctly received

```
 {
       if header(m) cannot be found in the OAW 135 /* could only happen due to system failures
       */
                       Send FH_Req;
       else
       {
               retrieve header (m) fro the OAW 135 or header (R_RFH);
               delete headers in OAW that are older than header (R_RFH);
               reconstruct header(n)-FO_DIFF(n, m) + header(m);
               if R_RFH!=m
                       R_RFH-m and store header(m) as header(R_RFH);
               if FO(n, m) is one of the first two FO packets received or
                       N_RT FO packets have been received since last ACKed FO packet
               {
                        Send ACK(n);
                        R_Last_Acked-n; store header (n) in the OAW:
                }
                store reconstructed header (n) in header(R_Last_Decomp);
 }
```

If SO(n) is correctly received

```
 {
        if it's the first SO packet after a non-SO packet
        {
                find the two most recently reconstructed headers in OAW 135;
                if not found /* could only happen due to system
 failure */
                        Send FH_Req;
                else /*let the two headers be header (p) and
 header (q), p<q*/
                        R_DFOD+FO_DIFF(q,p)/Diff(q,p);
        }
        reconstruct header(n)-R_DFOD * Diff(n, R_Last_Decomp) +
 header(R_Last_Decomp);
        store header(n) in header(R_Last_Decomp);
        if 1) (seq_cycle - N_RT) packets have elapsed since R_Last_ACKed, or,
         /* time to send a periodic ack */
           2) extended_flag in SO is ON and this is the first such packet, or,
             /* the compressor switches to extended mode; send ack so the compressor returns
 to normal mode */
           3) received more than N_RT packets with extended_flag ON since R_Last_ACK
             /* the previous ack was apparently not received; send another ack */
         {
            Send ACK(n); n is coded in extended mode if conditions 2 or 3 are met
            R_Last_Acked-n:
           store Header (n) in the OAW;
         }
 }
         store header(n) in the OAW 135 and also header(R_Last_Decomp);
 }
```

if FO(n, m) is correctly received

```
 {
         if header(m) cannot be found in the OAW 135 /* could only happen due to system failures
         */
                          Send FH_Req;
         else
         {
                 retrieve header (m) fro the OAW 135 or header (R_RFH);
                 delete headers in OAW that are older than header (R_RFH);
                 reconstruct header(n)-FO_DIFF(n, m) + header(m);
                 if R_RFH!=m
                         R_RFH-m and store header(m) as header(R_RFH);
                 if FO(n, m) is one of the first two FO packets received or
                         N_RT FO packets have been received since last ACKed FO packet
                 {
                         Send ACK(n);
                        R_Last_Acked-n; store header (n) in the OAW:
                 }
                 store reconstructed header (n) in header(R_Last_Decomp);
 }
```

If SO(n) is correctly received

```
 {
         if it's the first SO packet after a non-SO packet
         {
                 find the two most recently reconstructed headers in OAW 135;
                 if not found /* could only happen due to system
 failure */
                        Send FH_Req;
                 else /*let the two headers be header (p) and
 header (q), p<q*/
                        R_DFOD+FO_DIFF(q,p)/DifF(q,p);
         }
         reconstruct header(n)-R_DFOD * Diff(n, R_Last_Decomp) +
 header(R_Last_Decomp);
         store header(n) in header(R_Last_Decomp);
         if 1) (seq_cycle - N_RT) packets have elapsed since R_Last_ACKed, or,
         /* time to send a periodic ack */
          2) extended_ flag in SO is ON and this is the first such packet, or,
             /* the compressor switches to extended mode; send ack so the compressor returns
 to normal mode */
          3) received more than N_RT packets with extended_flag ON since R_Last_ACK
            /* the previous ack was apparently not received; send another ack */
         {
            Send ACK(n); n is coded in extended mode if conditions 2 or 3 are met
            R_Last_Acked-n:
           store Header (n) in the OAW;
         }
 }
```

### HSW 117 and OAW 135

In the worst case, where the round trip delay is actually equal to RTT_UB, the OAW 135 or HSW 117 may need to hold 2^{ℓ-extended} headers. However, that is very unlikely to happen. In most cases, less than 2^{k} entries need to be maintained in the HSW 117 or OAW 135. In practice this means a pretty small number of entries for both OAW and HSW. For example, 16 (k=4) entries will provide 320 msec of round trip time, assuming a 20 msec spacing per packet.

Static fields do not need to be stored as multiple entries in HSW 117 or OAW 135. Only a single copy of the static fields is needed.

In RFC 2508, each compressed header carries a sequence number. In most cases, the sequence number is enough to reconstruct the full header by linear extrapolation. For those packets where linear extrapolation would result in incorrect header reconstruction, the compressor sends a first order difference information with respect to the immediately preceding packet. Thus, the loss of a packet will invalidate subsequent packets with compressed headers, since the lost packet could be carrying FO difference information. RFC 2508 relies solely on the 4-bit sequence number to detect packet losses. The sequence number wraps around every 16 packets. When an error burst longer than 16 packets occurs, there is a 1 in 16 probability of not detecting errors, which is unacceptably high. Furthermore, even if the decompressor were able to detect errors, to recover from errors, the decompressor has to request the compressor to send a large size header by sending a CONTEXT_STATE message. Thus there is a round trip delay incurred before the requested header reaches the receiver. In the case of real-time conversational traffic, this delay translates into a break in the conversation. In addition, sending a large size header is expensive in terms of bandwidth.

An embodiment of the present invention uses a k-bit sequence number (k could be set equal to 4) for linear extrapolation. Like RFC 2508, when linear extrapolation would result in incorrect header reconstruction, the compressor sends a FO difference information. Unlike RFC 2508, the difference is calculated with respect to a reference packet known to be correctly received. That packet is not necessarily the one immediately preceding the current packet. This feature ensures that the current header can be reliably reconstructed even if one or more past packets were lost. Since the header can be reliably reconstructed in that manner, there is no need to send a full header. The first order difference information can most of the time be encoded with fewer bits than the absolute value of the full header. The FO difference header has an additional field that carries the reference number, i.e. sequence number of the reference packet. To guarantee that errors will be detected even in the present of long error bursts, the decompressor sends an ACK frequently enough so that the compressor receives an ack at least once every seq_cycle packets. In the absence of such an ACK, the compressor will presume that there may be a long error burst. In most cases, it is then enough that the compressor simply switch to a ℓ_extended-bit sequence number, where ℓ_extended is large enough to avoid any ambiguity. In any event, the loss of a packet will not invalidate subsequent packets with compressed headers. Therefore, when the decompressor detects a packet loss, it does not have to request retransmission.

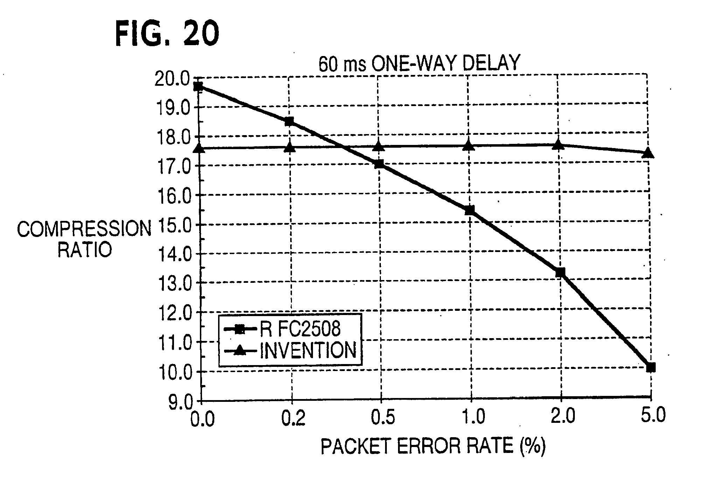

Fig. 20 below shows comparative results of prior art RFC 2508 with the invention. One way (fixed) delay of 60ms is assumed in this test. The inter spacing between RTP packets is 30ms. The random error model is used with different average packet error rates. The compression ratio is defined as the ratio between average size of compressed headers and the size of the original IP/UDP/RTP headers. Note that with the invention, the size of ACK packets is included in the calculation of the average compressed header size. The invention outperforms the RFC 1508 as soon as the packet error rate is higher than 0.4%.

The robust scheme of the invention requires the compressor and decompressor to maintain the HSW 117 and OAW 135 queues, respectively. Assuming that the roundtrips are less than 320 msec, the size of the queues is 16 entries + one copy of the static fields.

| | Ipv4 | Ipv6 |
|---|---|---|
| Size of static fields (in bytes) | 18 | 40 |
| Size of one entry (in bytes) | 22 | 20 |
| Total size of HSW or OAW for one bi-directional session (in bytes) | (16*22 + 18)* 2 = 740 | (16*20 + 40)*2 = 720 |

About I megabyte of memory will allow to handle more than 1400 sessions simultaneously. The processing load to manage the queues is very moderate, as it involves pointer manipulation.

While the invention has been described in terms of its preferred embodiments, it should be understood that numerous modifications of the invention may be made without departing from the scope of the invention. It is intended that such modifications fall within the scope of the appended claims.

## Claims

1. A method of regenerating compressed headers of packets at a receiver (130, 150), the method comprising:
receiving from a transmitter (110, 120) a string of packets each of which contains a sequence number identifying a position in the string of each transmitted packet, with at least one packet within the received string being received with an erroneous compressed header;
storing the at least one packet having an erroneous header;
determining how many packets constitute the at least one stored packet with an erroneous header;
processing the sequence numbers of a first packet preceding the at least one stored packet with an erroneous header and a second packet succeeding the at least one stored packet to determine the number of packets between the first and second packets; and
when the number of stored packets with erroneous headers matches the determined number of packets between the first and second packets, regenerating the compressed header of the at least one stored packet by adding a function of an extrapolation function to a value in the header of the at least one stored packet.

2. A method in accordance with claim 1, wherein the function of the extrapolation function increases linearly between sequential packets.

3. A method in accordance with claim 1, wherein the function of the extrapolation function increases non-linearly between sequential packets

4. A method in accordance with claim 1 or claim 3, wherein the step of regenerating comprises adding a function of a plurality of different extrapolation functions to the value in the header of the stored packet.

5. A method in accordance with any of claims 1 to 4, wherein the processing step comprises determining a difference between the sequence numbers of the first and second packets.

6. A method in accordance with any of claims 1 to 5, wherein the extrapolation function is a time stamp or a sequence number or an IP ID of the stored packet.

7. A method in accordance with any one of claims 1 to 6, wherein storing the at least one packet having an erroneous header comprises buffering the at least one packet.

8. A receiver (130, 150) configured to:
receive from a transmitter (110, 120) a string of packets each of which contains a sequence number identifying a position in the string of each transmitted packet, with at least one packet within the string being received with an erroneous compressed header;
store the at least one packet having an erroneous header;
determine how many packets constitute the at least one stored packets;
process the sequence numbers of a first packet preceding and a second packet succeeding the at least one stored packet to determine the number of packets between the first and second packets, and
when the number of stored packets with erroneous headers matches the determined number of packets between the first and second packets, to regenerate the compressed headers of the at least one stored packet by adding a function of an extrapolation function to a value in the header of the at least one stored packet.

9. A receiver (130, 150) in accordance with claim 8, configured to determine a difference between the sequence number of the first and second packets.

10. A receiver (130, 150) in accordance with claim 8 or 9, configured to buffer the at least one packet having an erroneous header.

## Patentansprüche

1. Verfahren zum Wiederherstellen komprimierter Header von Paketen in einem Empfänger (130, 150), wobei das Verfahren Folgendes umfasst:
Empfangen einer Kette von Paketen von einem Sender (110, 120), von denen jedes eine Sequenznummer enthält, die für jedes gesendete Paket eine Position in der Kette identifiziert, wobei wenigstens ein Paket aus der empfangenen Kette mit einem fehlerhaften komprimierten Header empfangen wird;
Speichern des wenigstens einen Pakets mit einem fehlerhaften Header;
Feststellen, um wie viele Pakete es sich bei dem wenigstens einen gespeicherten Paket mit einem fehlerhaften Header handelt;
Verarbeiten der Sequenznummern eines ersten Pakets, das dem wenigstens einen gespeicherten Paket mit einem fehlerhaften Header vorausgeht, und eines zweiten Pakets, das dem wenigstens einen gespeicherten Paket nachfolgt, um die Zahl der Pakete zwischen dem ersten und dem zweiten Paket zu bestimmen; und
falls die Zahl gespeicherter Pakete mit fehlerhaften Headern gleich der festgestellten Zahl von Paketen zwischen dem ersten und dem zweiten Paket ist, Wiederherstellen des komprimierten Headers des wenigstens einen gespeicherten Pakets durch das Addieren einer Funktion einer Extrapolationsfunktion zu einem Wert im Header des wenigstens einen gespeicherten Pakets.

2. Verfahren nach Anspruch 1, wobei die Funktion der Extrapolationsfunktion zwischen aufeinanderfolgenden Paketen linear zunimmt.

3. Verfahren nach Anspruch 1, wobei die Funktion der Extrapolationsfunktion zwischen aufeinanderfolgenden Paketen nichtlinear zunimmt.

4. Verfahren nach Anspruch 1 oder Anspruch 3, wobei der Schritt zum Wiederherstellen das Addieren einer Funktion von mehreren verschiedenen Extrapolationsfunktionen zum Wert im Header des gespeicherten Pakets umfasst.

5. Verfahren nach einem der Ansprüche 1 bis 4, wobei der Verarbeitungsschritt das Bestimmen einer Differenz zwischen den Sequenznummern des ersten und zweiten Pakets umfasst.

6. Verfahren nach einem der Ansprüche 1 bis 5, wobei die Extrapolationsfunktion ein Zeitstempel oder eine Sequenznummer oder eine IP-ID des gespeicherten Pakets ist.

7. Verfahren nach einem der Ansprüche 1 bis 6, wobei das Speichern des wenigstens einen Pakets mit einem fehlerhaften Header das Puffern des wenigstens einen Pakets umfasst.

8. Empfänger (130, 150), der für Folgendes eingerichtet ist:
Empfangen einer Kette von Paketen von einem Sender (110, 120), von denen jedes eine Sequenznummer enthält, die für jedes gesendete Paket eine Position in der Kette identifiziert, wobei wenigstens ein Paket aus der Kette mit einem fehlerhaften komprimierten Header empfangen wird;
Speichern des wenigstens einen Pakets mit einem fehlerhaften Header;
Feststellen, um wie viele Pakete es sich bei dem wenigstens einen gespeicherten Paket handelt;
Verarbeiten der Sequenznummern eines ersten Pakets und eines zweiten Pakets, das dem wenigstens einen gespeicherten Paket vorausgeht bzw. nachfolgt, um die Zahl der Pakete zwischen dem ersten und dem zweiten Paket zu bestimmen; und
falls die Zahl gespeicherter Pakete mit fehlerhaften Headern gleich der festgestellten Zahl von Paketen zwischen dem ersten und dem zweiten Paket ist, Wiederherstellen der komprimierten Header des wenigstens einen gespeicherten Pakets durch das Addieren einer Funktion einer Extrapolationsfunktion zu einem Wert im Header des wenigstens einen gespeicherten Pakets.

9. Empfänger (130, 150) nach Anspruch 8, der dafür eingerichtet ist, eine Differenz zwischen der Sequenznummer des ersten und zweiten Pakets zu bestimmen.

10. Empfänger (130, 150) nach Anspruch 8 oder 9, der dafür eingerichtet ist, das wenigstens eine Paket mit einem fehlerhaften Header zu puffern.

## Revendications

1. Procédé de régénération d'en-têtes compressés de paquets à un récepteur (130, 150), le procédé comprenant :
la réception depuis un émetteur (110, 120) d'une chaîne de paquets dont chacun contient un numéro de séquence identifiant une position dans la chaîne de chaque paquet transmis, au moins un paquet dans la chaîne reçue étant reçu avec un en-tête compressé erroné ;
le stockage dudit au moins un paquet ayant un en-tête erroné ;
la détermination du nombre de paquets constituant ledit au moins un paquet stocké avec un en-tête erroné ;
le traitement des numéros de séquence d'un premier paquet précédant l'au moins un paquet stocké avec un en-tête erroné et un deuxième paquet succédant à l'au moins un paquet stocké pour déterminer le nombre de paquets entre les premier et deuxième paquets ; et
lorsque le nombre de paquets stockés avec des en-têtes erronés correspond au nombre déterminé de paquets entre les premier et deuxième paquets, la régénération de l'en-tête compressé de l'au moins un paquet stocké par ajout d'une fonction d'une fonction d'extrapolation à une valeur dans l'en-tête de l'au moins un paquet stocké.

2. Procédé selon la revendication 1, dans lequel la fonction de la fonction d'extrapolation augmente linéairement entre les paquets séquentiels.

3. Procédé selon la revendication 1, dans lequel la fonction de la fonction d'extrapolation augmente non linéairement entre des paquets séquentiels.

4. Procédé selon la revendication 1 ou la revendication 3, dans lequel l'étape de régénération comprend l'ajout d'une fonction d'une pluralité de différentes fonctions d'extrapolation à la valeur dans l'en-tête du paquet stocké.

5. Procédé selon l'une quelconque des revendications 1 à 4, dans lequel l'étape de traitement comprend la détermination d'une différence entre les numéros de séquence des premier et deuxième paquets.

6. Procédé selon l'une quelconque des revendications 1 à 5, dans lequel la fonction d'extrapolation est un horodatage ou un numéro de séquence ou ID IP du paquet stocké.

7. Procédé selon l'une quelconque des revendications 1 à 6, dans lequel le stockage de l'au moins un paquet ayant un en-tête erroné comprend la mise en mémoire tampon de l'au moins un paquet.

8. Récepteur (130, 150) configuré pour :
recevoir depuis un émetteur (110, 120) une chaîne de paquets dont chacune contient un numéro de séquence identifiant une position dans la chaîne de chaque paquet transmis, au moins un paquet dans la chaîne étant reçu avec un en-tête compressé erroné ;
stocker l'au moins un paquet ayant un en-tête erroné ;
déterminer le nombre de paquets constituant les au moins un paquets stockés ;
traiter les numéros de séquence d'un premier paquet précédent et un deuxième paquet suivant l'au moins un paquet stocké pour déterminer le nombre de paquets entre les premier et deuxième paquets, et
lorsque le nombre de paquets stockés avec des en-têtes erronés correspond au nombre déterminé de paquets entre les premier et deuxième paquets, pour régénérer les en-têtes compressés de l'au moins un paquet stocké par ajout d'une fonction d'une fonction d'extrapolation à une valeur dans l'en-tête de l'au moins un paquet stocké.

9. Récepteur (130, 150) selon la revendication 8, configuré pour déterminer une différence entre le numéro de séquence des premier et deuxième paquets.

10. Récepteur (130, 150) selon la revendication 8 ou 9, configuré pour mettre en mémoire tampon l'au moins un paquet ayant un en-tête erroné.
